(19)

Europäisches Patentamt
European Patent Office
Office européen des brevets

(11) **EP 4 239 120 A1**

(12) **EUROPEAN PATENT APPLICATION**
published in accordance with Art. 153(4) EPC

(43) Date of publication:
**06.09.2023 Bulletin 2023/36**

(21) Application number: **21886311.6**

(22) Date of filing: **28.10.2021**

(51) International Patent Classification (IPC):
***D06M 15/273*** *(2006.01)*    ***D06M 15/507*** *(2006.01)*
***D06M 15/572*** *(2006.01)*

(52) Cooperative Patent Classification (CPC):
**D06M 15/273; D06M 15/507; D06M 15/572**

(86) International application number:
**PCT/JP2021/039804**

(87) International publication number:
**WO 2022/092194 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2020   JP 2020182407**

(71) Applicant: **Sanyo Chemical Industries, Ltd.
Kyoto-shi, Kyoto 605-0995 (JP)**

(72) Inventor: **INOUE, Hirofumi
Kyoto-shi, Kyoto 605-0995 (JP)**

(74) Representative: **Mewburn Ellis LLP
Aurora Building
Counterslip
Bristol BS1 6BX (GB)**

(54) **FIBER SIZING AGENT COMPOSITION, FIBER BUNDLE, FIBER PRODUCT, AND COMPOSITE MATERIAL**

(57)    The present invention provides a fiber sizing agent composition containing: a first resin (A) having at least one first functional group selected from the group consisting of a vinyl group, a vinylene group and a sulfanyl group, and at least one second functional group selected from the group consisting of an epoxy group, an amino group and an oxazolin-2-yl group; and a second resin (B), having an acid value of 0 to 20 mgKOH/g, and having a hydrophobic site with an SP value of 10.6 to 11.6 $(cal/cm^3)^{1/2}$.

EP 4 239 120 A1

**Description**

TECHNICAL FIELD

The present invention relates to a fiber sizing agent composition, a fiber bundle, a fiber product, and a composite material.

BACKGROUND ART

Composite materials of various kinds of fibers and various matrix resins are widely utilized in fields such as sports equipment, leisure equipment, and aircraft.

Examples of fibers used in these composite materials include glass fibers, carbon fibers, ceramic fibers, metal fibers, mineral fibers, rock fibers and slag fibers. In the step of processing these fibers into the composite materials, a sizing agent is generally applied to prevent fluffing and end breakage.

Fibers treated with a conventional sizing agent may have insufficient adhesion to a matrix resin when the matrix resin is a thermosetting resin or a thermoplastic resin, such as a vinyl ester resin or an unsaturated polyester resin, resulting in composite materials having insufficient physical properties.

As countermeasures to solve this problem, there are known a fiber sizing agent in which an epoxy resin is dispersed in an aqueous medium by a urethane resin having an alkoxypolyoxyethylene structure and an epoxy group (e.g., Patent Literature 1), and a technology of using a polyethyleneimine as a sizing agent (e.g., Patent Literature 2).

CITATION LIST

- Patent Literature

Patent Literature 1: JP 2013-249562 A
Patent Literature 2: JP H03-065311 A

SUMMARY OF INVENTION

- Technical Problem

For the improvement in physical properties of composite materials, from the viewpoint of effectively utilizing characteristics of fibers, high adhesion between fibers and matrix resins is important, and from the viewpoint of handleability of fiber bundles, sizing properties and little fluffing are important. From such situations, there has been demanded a sizing agent which can improve the adhesion between fibers and matrix resins and can improve the handleability of fibers, and can form fiber bundles having less fluffing.

The sizing agents proposed in Patent Literatures 1 and 2, however, have such problems that the sizing agents are incapable of sufficiently improving the adhesion between fibers and a matrix resin and the sizing properties, and are incapable of sufficiently suppressing fluffing of fiber bundles. Further, there is also demanded a sizing agent small in the change over time in the performance including the adhesion and the like.

The present invention aims to provide a fiber sizing agent composition having small change in the above-mentioned performance over time, and being capable of forming fiber bundles having high adhesion between fibers and a matrix resin, having high sizing properties and less fluffing.

- Solution to Problem

As a result of studies to achieve the above object, the present inventors have arrived at the present invention.

Specifically, the present invention provides: a fiber sizing agent composition containing: a first resin (A) having at least one first functional group selected from the group consisting of a vinyl group, a vinylene group and a sulfanyl group, and at least one second functional group selected from the group consisting of an epoxy group, an amino group and an oxazolin-2-yl group, and a second resin (B) being a resin other than the first resin, having an acid value of 0 to 20 mgKOH/g, and having a hydrophobic site with an SP value of 10.6 to 11.6 $(cal/cm^3)^{1/2}$; a fiber bundle containing: at least one type of fibers selected from the group consisting of carbon fibers, glass fibers, aramid fibers, ceramic fibers, metal fibers, mineral fibers and slag fibers, the fibers being treated with the fiber sizing agent composition; a fiber bundle containing: at least one type of fibers selected from the group consisting of carbon fibers, glass fibers, aramid fibers, ceramic fibers, metal fibers, mineral fibers and slag fibers, a first resin (A) having at least one first functional group selected from the group consisting of a vinyl group, a vinylene group and a sulfanyl group, and at least one second functional group selected from the group consisting of an epoxy group, an amino group and an oxazolin-2-yl group, and/or a reaction product of the first resin (A), and a second resin (B) being a resin other than the first resin, having an acid value of 0 to 20 mgKOH/g, and having a hydrophobic site with an SP value of 10.6 to 11.6 $(cal/cm^3)^{1/2}$, and/or a reaction product of the second resin (B), wherein the reaction product of the first resin (A) contains a reaction product obtained from a reaction between the first resins (A) and/or a reaction product obtained from a reaction between the first resin (A) and a fiber, and the reaction product of the second resin (B) contains a reaction product obtained from a reaction between the second resin (B) and the first resin (A) and/or a reaction product obtained from a reaction between the second resin (B) and a fiber; a fiber product containing the fiber bundle; and a composite material containing: the fiber bundle or the fiber product, and a matrix resin.

- Advantageous Effects of Invention

The present invention has an effect which can provide a sizing agent having small change in the above-mentioned performance over time, being capable of improving the adhesion between fibers and a matrix resin, and also capable of forming fiber bundles and fiber products having high sizing properties and less fluffing.

DESCRIPTION OF EMBODIMENTS

[Fiber sizing agent composition]

A fiber sizing agent composition contains: a first resin (A) having at least one first functional group selected from the group consisting of a vinyl group, a vinylene group and a sulfanyl group, and at least one second functional group selected from the group consisting of an epoxy group, an amino group and an oxazolin-2-yl group; and a second resin (B) being a resin other than the first resin, having an acid value of 0 to 20 mgKOH/g, and having a hydrophobic site with an SP value of 10.6 to 11.6 $(cal/cm^3)^{1/2}$.

The first resin (A) has at least one first functional group selected from the group consisting of a vinyl group, a vinylene group and a sulfanyl group, and at least one second functional group selected from the group consisting of an epoxy group, an amino group and an oxazolin-2-yl group. The first resin (A) includes a resin (A1) having at least one vinyl group and at least one epoxy group, a resin (A2) having at least one vinylene group and at least one epoxy group, a resin (A3) having at least one sulfanyl group and at least one epoxy group, a resin (A4) having at least one vinyl group and amino group, a resin (A5) having at least one vinyl group and at least one oxazolin-2-yl group, and a resin (A6) having at least one vinylene group and at least one oxazolin-2-yl group. The epoxy group is preferably a glycidyl group. The vinyl group is preferably a (meth)acryloyl group. The "(meth)acryloyl group" means an acryloyl group and/or a methacryloyl group. One type of the first resin (A) or a combination of two or more types thereof may be used.

Examples of the resin (A1) having at least one vinyl group and at least one epoxy group, (referred to also as "resin (A1)") include a (meth)acrylate-modified aromatic epoxy resin, and a (meth)acrylate of aromatic polyester having an epoxy group. The "(meth)acrylate" means acrylate and/or methacrylate. The (meth)acrylate-modified aromatic epoxy resin refers to a modified product made by modifying an aromatic epoxy resin with (meth)acrylic acid. The "(meth)acrylic acid" means acrylic acid and/or methacrylic acid.

Examples of the (meth)acrylate-modified aromatic epoxy resin include a (meth)acrylate-modified biphenyl epoxy resin, a (meth)acrylate-modified phenol novolac epoxy resin, and a (meth)acrylate-modified bisphenol epoxy resin (a bisphenol A epoxy resin, a bisphenol F epoxy resin, a bisphenol S epoxy resin, and the like). The (meth)acrylate-modified aromatic epoxy resin may be a compound which is an alkylene oxide (AO) adduct. The alkylene oxide is preferably an alkylene oxide having 2 to 20 carbon atoms. Examples of the AO include ethylene oxide (EO), propylene oxide (PO), butylene oxide (BO) and combinations of two or more of them. The number of moles of added AO is preferably 2 mol or higher and more preferably 4 mol or higher, and preferably 20 mol or lower and more preferably 14 mol or lower. Propylene oxide and butylene oxide may be those having a straight-chain or a branch.

Examples of the (meth)acrylate of aromatic polyester having an epoxy group include a (meth)acrylate of glycidyl ether of polyester having a bisphenol skeleton (bisphenol A, bisphenol F, bisphenol S or the like). The polyester having a bisphenol skeleton may be a compound which is an alkylene oxide adduct. The alkylene oxide (AO) and the number of moles of added AO may be the same as those exemplified in the description of the (meth)acrylate-modified aromatic epoxy resin, and the preferable ones may also be the same.

The polyester having a bisphenol skeleton can be obtained, for example, by reacting bisphenol or an AO adduct of bisphenol, with an aromatic dicarboxylic acid. As the AO adduct of bisphenol, there may be used commercially available AO adduct of bisphenol (Newpol BF-5, Newpol BPE-20, Newpol BPE-40, Newpol BP-3P and the like). As the aromatic dicarboxylic acid, there can be used the same one as an aromatic dicarboxylic acid (a42) exemplified as a material of the resin (A4) having at least one vinyl group and at least one amino group, described later. One type of the resin (A1) or a combination of two or more types thereof may be used.

The resin (A1) is preferably a (meth)acrylate-modified bisphenol epoxy resin or a (meth)acrylate of a glycidyl ether of a polyester having a bisphenol skeleton, and more preferably a (meth)acrylate-modified bisphenol A epoxy resin or a (meth)acrylate-modified bisphenol F epoxy resin. One type of the resin (A1) or a combination of two or more types thereof may be used.

The epoxy equivalent (g/eq) of the resin (A1) is, from the viewpoint of improvement in the adhesion between fibers and a matrix resin, preferably 100 to 3,000 and more preferably 200 to 2,000. In the present description, the epoxy equivalent is a value measured according to JIS K7236.

Examples of the resin (A2) having at least one vinylene group and at least one epoxy group, (referred to also as "resin (A2)" include an acyclic unsaturated dicarboxylic acid-modified aromatic epoxy resin, and an acyclic unsaturated dicarboxylic acid-modified product of aromatic polyester having an epoxy group.

Examples of the acyclic unsaturated dicarboxylic acid-modified aromatic epoxy resin include an acyclic unsaturated dicarboxylic acid-modified biphenyl epoxy resin, an acyclic unsaturated dicarboxylic acid-modified phenol novolac epoxy resin, and an acyclic unsaturated dicarboxylic acid-modified bisphenol epoxy resin (a bisphenol A epoxy resin, a bisphenol F epoxy resin, a bisphenol S epoxy resin, and the like). The acyclic unsaturated dicarboxylic acid-modified aromatic epoxy resin may be a compound which is an alkylene oxide adduct. The alkylene oxide (AO) and the number of moles of added AO may be the same as those exemplified in the description of the (meth)acrylate-modified aromatic epoxy resin, and the preferable ones may also be the same.

Examples of the acyclic unsaturated dicarboxylic acid-modified product of aromatic polyester having an epoxy group include an acyclic unsaturated dicarboxylic acid-modified product of glycidyl ether of polyester having a bisphenol skeleton (bisphenol A, bisphenol F, bisphenol S, and the like). The polyester having a bisphenol skeleton may be a compound which is an alkylene oxide adduct. The alkylene oxide (AO) and the number of moles of added AO may be the same as those exemplified in the description of the (meth)acrylate-modified aromatic epoxy resin, and the preferable ones may also be the same.

Examples of the acyclic unsaturated dicarboxylic acid (a2) constituting the acyclic unsaturated dicarboxylic acid-modified aromatic epoxy resin and the acyclic unsaturated dicarboxylic acid-modified product of aromatic polyester having an epoxy group include a straight or branched acyclic unsaturated dicarboxylic acid having 4 to 22 carbon atoms (maleic acid, fumaric acid, citraconic acid, mesaconic acid, dodecenylsuccinic acid, pentadecenylsuccinic acid, octadecenylsuccinic acid, and the like).

As the resin (A2) having at least one vinylene group and at least one epoxy group, preferable are an acyclic unsaturated dicarboxylic acid-modified bisphenol epoxy resin and an acyclic unsaturated dicarboxylic acid-modified product of glycidyl ether of polyester having a bisphenol skeleton; more preferable are an acyclic unsaturated dicarboxylic acid-modified bisphenol A epoxy resin and an acyclic unsaturated dicarboxylic acid-modified bisphenol F epoxy resin; and especially preferable is fumaric acid-modified bisphenol A epoxy resin. One type of the resin (A2) or a combination of two or more types thereof may be used.

The epoxy equivalent (g/eq) of the resin (A2) is, from the viewpoint of improvement in the adhesion between fibers and a matrix resin, preferably 100 to 3,000 and more preferably 200 to 2,000.

Examples of the resin (A4) having at least one vinyl group and at least one amino group, (referred to also as "resin (A4)") include an amidated product obtained from a reaction of the polyamide containing amino groups at both ends with (meth)acrylic acid (amidated product of a polyamide containing amino groups at both ends with (meth)acrylic acid), and an allylamine.

Examples of the polyamide containing amino groups at both ends (a4) constituting the amidated product obtained from a reaction of the polyamide containing amino groups at both ends with (meth)acrylic acid include a dicarboxylic acid (a4-1), and a condensate of an anhydride thereof and a diamine (a4-2).

Examples of the dicarboxylic acid (a4-1) include an aliphatic dicarboxylic acid (a41), an aromatic dicarboxylic acid (a42), and their acid anhydride.

Examples of the aliphatic dicarboxylic acid (a41) include an acyclic saturated aliphatic dicarboxylic acid (a411), an acyclic unsaturated aliphatic dicarboxylic acid (a412), an alicyclic dicarboxylic acid (a413), and a dimer acid (a414).

Examples of the acyclic saturated aliphatic dicarboxylic acid (a411) include a C2-C22 linear or branched acyclic saturated aliphatic dicarboxylic acid (e.g., oxalic acid, malonic acid, succinic acid, glutaric acid, methylsuccinic acid, ethylsuccinic acid, dimethylmalonic acid, $\alpha$-methylglutaric acid, $\beta$-methylglutaric acid, 2,4-diethylglutaric acid, isopropylmalonic acid, adipic acid, pimelic acid, suberic acid, azelaic acid, sebacic acid, decanedicarboxylic acid, undecanedicarboxylic acid, dodecanedicarboxylic acid, tridecanedicarboxylic acid, tetradecanedicarboxylic acid, hexadecanedicarboxylic acid, octadecanedicarboxylic acid, icosandicarboxylic acid, decylsuccinic acid, dodecylsuccinic acid, and octadecylsuccinic acid).

Examples of the acyclic unsaturated aliphatic dicarboxylic acid (a412) include a C4-C22 linear or branched acyclic unsaturated aliphatic dicarboxylic acid (e.g., maleic acid, fumaric acid, citraconic acid, mesaconic acid, dodecenylsuccinic acid, pentadecenylsuccinic acid, and octadecenylsuccinic acid).

Examples of the alicyclic dicarboxylic acid (a413) include an alicyclic dicarboxylic acid having 7 to 14 carbon atoms (1,3- or 1,2-cyclopentanedicarboxylic acid, 1,2-, 1,3- or 1,4-cyclohexanedicarboxylic acid, 1,2-, 1,3-or 1,4-cyclohexanediacetic acid, dicyclohexyl-4,4'-dicarboxylic acid and the like).

Examples of the dimer acid (a414) include a dimer of acyclic unsaturated aliphatic carboxylic acid having 8 to 24 carbon atoms (oleic acid, linoleic acid, linolenic acid and the like).

Examples of the aromatic dicarboxylic acid (a42) include an aromatic dicarboxylic acid having 8 to 14 carbon atoms (terephthalic acid, isophthalic acid, phthalic acid, phenylmalonic acid, phenylsuccinic acid, β-phenylglutaric acid, α-phenyladipic acid, β-phenyladipic acid, biphenyl-2,2'- or 4,4'-dicarboxylic acid, naphthalenedicarboxylic acid, sodium 5-sulfoisophthalate, potassium 5-sulfoisophthalate and the like).

One type of dicarboxylic acid (a4-1) or its anhydride may be used alone or two or more thereof may be used in combination.

Among these, from the viewpoint of sizing properties, preferable are the acyclic saturated aliphatic dicarboxylic acid (a411), the acyclic unsaturated aliphatic dicarboxylic acid (a412), and the aromatic dicarboxylic acids (a42); more preferable are oxalic acid, malonic acid, succinic acid, adipic acid, sebacic acid, maleic acid, fumaric acid, terephthalic acid, isophthalic acid, and phthalic acid; and especially preferable are adipic acid, maleic acid, fumaric acid, terephthalic acid, and isophthalic acid.

Examples of the diamine (a4-2) include an aliphatic diamine having 2 to 20 carbon atoms (ethylenediamine, propylenediamine, hexamethylenediamine and the like), an alicyclic amine having 6 to 20 carbon atoms (diaminocyclohexane, dicyclohexylmethanediamine, isophoronediamine and the like), an aromatic diamine having 2 to 20 carbon atoms (phenylenediamine, tolylenediamine, diphenylmethanediamine and the like), and a heterocyclic diamine having 2 to 20 carbon atoms (piperazine, N-aminoethylpiperazine and the like).

Among these, the aliphatic diamine having 2 to 20 carbon atoms is preferable and ethylenediamine is more preferable.

The resin (A4) is preferably an amidated product of a polyamide containing amino groups at both ends and (meth)acrylic acid, and more preferably an amidated compound of a condensate of adipic acid and ethylenediamine, and (meth)acrylic acid. One type of the resin (A4) or a combination of two or more types thereof may be used.

Examples of the resin (A5) having at least one vinyl group and at least one oxazolin-2-yl group, [referred to also as resin (A5)] include a product of reaction between an oxazolin-2-yl group-containing compound (a5) and (meth)acrylic acid. The amounts of the oxazolin-2-yl group-containing compound (a5) and the (meth)acrylic acid to be used in preparation of the reaction product are preferably such amounts that the difference when the amount of the functional group of the (meth)acrylic acid is subtracted from the amount of the oxazolin-2-yl group in the compound (a5) is 0.2 mmol/g to 8 mmol/g. One type of the resin (A5) or a combination of two or more types thereof may be used.

The oxazolin-2-yl group-containing compound (a5) is not especially limited as long as being a compound having an oxazolin-2-yl group, and examples thereof include an oxazolin-2-yl group-containing polymer such as "Epocros K-2010E", "Epocros K-2020E", "Epocros K-2030E", "Epocros WS-300", "Epocros WS-500", "Epocros WS-700", "PX3-RP-37" and "Epocros RPS-1005", manufactured by Nippon Shokubai Co., Ltd.

The first resin (A) is preferably the resin (A1) having at least one vinyl group and at least one epoxy group, more preferably a resin having at least one (meth)acryloyl group and at least one epoxy group, still more preferably a (meth)acrylate-modified bisphenol epoxy resin or a (meth)acrylate of a glycidyl ether of a polyester having a bisphenol skeleton, and especially preferably a (meth)acrylate-modified bisphenol A epoxy resin or a (meth)acrylate-modified bisphenol F epoxy resin.

The second resin (B) is a resin other than the first resin, and is the resin having a hydrophobic site with an SP value of 10.6 to 11.6 $(\text{cal/cm}^3)^{1/2}$ and having an acid value of 0 to 20 mgKOH/g. The "resin other than the first resin" refers to a resin which is without either one or both of the first functional group (functional group selected from the group consisting of a vinyl group, a vinylene group and a sulfanyl group) and the second functional group (functional group selected from the group consisting of an epoxy group, an amino group and an oxazolin-2-yl group) of the first resin.

The hydrophobic site in the second resin (B) means a structure originated from a compound (hydrophobic compound) excluding a water-soluble compound, in the structure of the second resin (B). In the present description, the "water-soluble compound" means a compound 5 g or more of which can be dissolved in 100 g of water at 25°C.

For example, when the second resin is a polyester resin obtained by reacting a polyethylene glycol (water-soluble compound) with a reaction product (hydrophobic compound) between 4 mol of a 2 mol EO-adduct of bisphenol A and 5 mol of terephthalic acid, the hydrophobic site has a structure originated from the hydrophobic compound (the reaction product between 4 mol of a 2 mol EO-adduct of bisphenol A and 5 mol of terephthalic acid) excluding the water-soluble compound (the polyethylene glycol).

Examples of the water-soluble compound include a polyethylene glycol and a 40 mol EO-adduct of bisphenol A.

The hydrophobic compound is preferably a reaction product selected from the group consisting of a product of reaction between aromatic diol and aromatic dicarboxylic acid and/or aliphatic dicarboxylic acid, and a product of reaction between aromatic diol and aromatic diisocyanate. The reaction product may be a reaction product obtained from a reaction between two or more dicarboxylic acids and a diol, or a reaction product obtained from a reaction between two or more diisocyanates and a diol.

Here, when the reaction product has a carboxyl group (-CO$_2$H) at its end, and the second resin (B) has a group (e.g., -CO$_2$-) originated from the carboxyl group, the "structure originated from a hydrophobic compound" includes the group originated from the carboxyl group. When the reaction product has an isocyanate group (-NCO) at its end, and the second resin (B) has a group (e.g., -NHCO$_2$-) originated from the isocyanate group, the "structure originated from a hydrophobic compound" includes the group originated from the isocyanate group.

The aromatic diol constituting the reaction product is preferably a EO or PO adduct of bisphenol, and more preferably a PO adduct of bisphenol.

The aromatic dicarboxylic acid constituting the reaction product is preferably the same aromatic dicarboxylic acid (b12) as exemplified in the description of a dicarboxylic acid or its anhydride (b1) constituting a polyester resin (B1) described later.

The aliphatic dicarboxylic acid constituting the reaction product is preferably the same aliphatic dicarboxylic acid (b11) as exemplified in the description of the dicarboxylic acid or its anhydride (b1) constituting the polyester resin (B1) described later.

The aromatic diisocyanate constituting the reaction product is preferably the same aromatic diisocyanate having 8 to 30 carbon atoms as exemplified in the description of a polyisocyanate (b3) constituting a polyurethane resin (B2) described later.

The product of reaction between aromatic diol and aromatic dicarboxylic acid and/or aliphatic dicarboxylic acid, and the product of reaction between aromatic diol and aromatic diisocyanate are preferably a product of reaction between AO adduct of bisphenol and aromatic dicarboxylic acid, a product of reaction between AO adduct of bisphenol and aliphatic dicarboxylic acid, a product of reaction between AO adduct of bisphenol and aromatic diisocyanate, and the like. Specifically, preferable are a product of reaction between EO adduct of bisphenol A and terephthalic acid, a product of reaction between PO adduct of bisphenol A and terephthalic acid, a product of reaction between EO/PO adduct of bisphenol A and terephthalic acid, a product of reaction between EO adduct of bisphenol A and fumaric acid, a product of reaction between PO adduct of bisphenol A and fumaric acid, a product of reaction between EO/PO adduct of bisphenol A and fumaric acid, a product of reaction between EO adduct of bisphenol A and terephthalic acid and fumaric acid, a product of reaction between EO adduct of bisphenol A and adipic acid, a product of reaction between PO adduct of bisphenol A and adipic acid, a product of reaction between EO/PO adduct of bisphenol A and adipic acid, a product of reaction between PO adduct of bisphenol A and toluenediisocyanate, and the like.

The SP value (solubility parameter)[unit: (cal/cm$^3$)$^{1/2}$] in the present invention is a value calculated by using numerical values (evaporation heat and molar volume of atoms and functional groups at 25°C) described in page 152 (Table 5) of Fedors method (Polymer Engineering and Science, February, 1974, Vol. 14, No. 2, P. 147 to 154), and by a method described as an expression (28) in page 153 thereof. Specifically, the SP value can be calculated by applying numerical values of $\Delta e_i$ and $\Delta v_i$, parameters of Fedors method, corresponding to atoms and atomic groups in a molecular structure described in the following Table 1 to the following expression (A).

$$\text{SP value} = (\Sigma \Delta e_i / \Sigma \Delta v_i)^{1/2} \ \dots \ (A)$$

$\Sigma \Delta e_i$ (unit: cal/mol) in the above expression is a cohesive energy density (unit: cal/mol); and $\Sigma \Delta v_i$ is a molecular volume (unit: cm$^3$/mol).

[Table 1]

| Atom or group | $\Delta e_i$, cal/mole | $\Delta v_i$, cm³/mole | Atom or group | $\Delta e_i$, cal/mole | $\Delta v_i$, cm³/mole |
|---|---|---|---|---|---|
| CH₃ | 1125 | 33.5 | Cl | 2760 | 24.0 |
| CH₂ | 1180 | 16.1 | Cl (disubstituted) | 2300 | 26.0 |
| CH | 820 | —1.0 | Cl (trisubstituted) | 1800 | 27.3 |
| C | 350 | —19.2 | Br | 3700 | 30.0 |
| H₂C= | 1030 | 28.5 | Br (disubstituted) | 2950 | 31.0 |
| —CH= | 1030 | 13.5 | Br (trisubstituted) | 2550 | 32.4 |
| C= | 1030 | —5.5 | I | 4550 | 31.5 |
| HC≡ | 920 | 27.4 | I (disubstituted) | 4000 | 33.3 |
| —C≡ | 1690 | 6.5 | I (trisubstituted) | 3900 | 37.0 |
| Phenyl* | 7630 | 71.4 | B | 3300 | —2.0 |
| Phenylene (o, m, p)* | 7630 | 52.4 | Al | 3300 | —2.0 |
| Phenyl (trisubstituted)* | 7630 | 33.4 | Ga | 3300 | —2.0 |
| Phenyl (tetrasubstituted)* | 7630 | 14.4 | In | 3300 | —2.0 |
| Phenyl (pentasubstituted)* | 7630 | —4.6 | Tl | 3300 | —2.0 |
| Phenyl (hexasubstituted)* | 7630 | —23.6 | Si | 810 | 0 |
| Ring closure 5 or more atoms | 250 | 16 | Ge | 1930 | —1.5 |
| Ring closure 3 or 4 atoms | 750 | 18 | Sn | 2700 | 1.5 |
| Conjugation in ring for each double bond | 400 | —2.2 | Pb | 4100 | 2.5 |
| Halogen attached to carbon atom with double bond | —20 percent of $\Delta e_i$ of halogen | 4.0 | P | 2250 | —1.0 |
| CO₃ (carbonate) | 4200 | 22.0 | As | 3100 | 7.0 |
| COOH | 6600 | 28.5 | Sb | 3900 | 8.9 |
| CO₂ | 4300 | 18.0 | Bi | 5100 | 9.5 |
| CO | 4150 | 10.8 | Se | 4100 | 16.0 |
| CHO (aldehyde) | 5100 | 22.3 | Te | 4800 | 17.4 |
| CO₂CO₂ (oxalate) | 6400 | 37.3 | Zn | 3460 | 2.5 |
| C₂O₃ (anhydride) | 7300 | 30.0 | Cd | 4250 | 6.5 |
| HCOO (formate) | 4300 | 32.5 | Hg | 5450 | 7.5 |
| CONH₂ | 10000 | 17.5 | | | |
| CONH | 8000 | 9.5 | | | |
| CON | 7050 | —7.7 | | | |
| HCON | 6600 | 11.3 | | | |
| HCONH | 10500 | 27.0 | | | |
| COCl | 5000 | 38.0 | | | |
| NH₂ | 3000 | 19.2 | | | |
| NH | 2000 | 4.5 | | | |
| N | 1000 | —9.0 | | | |
| —N= | 2800 | 5.0 | | | |
| CN | 6100 | 24.0 | | | |
| NO₂ (aliphatic) | 7000 | 24.0 | | | |
| NO₂ (aromatic) | 3670 | 32.0 | | | |
| NO₃ | 5000 | 33.5 | | | |
| NO₂ (nitrite) | 2800 | 33.5 | | | |
| SCN | 4800 | 37.0 | | | |
| NCO | 6800 | 35.0 | | | |
| NF₂ | 1830 | 33.1 | | | |
| NF | 1210 | 24.5 | | | |
| O | 800 | 3.8 | | | |
| OH | 7120 | 10.0 | | | |
| OH (disubstituted or on adjacent C atoms) | 5220 | 13.0 | | | |
| PO₄ | 5000 | 28.0 | | | |
| PO₂ | 3400 | 22.7 | | | |
| SH | 3450 | 28.0 | | | |
| S | 3380 | 12 | | | |
| S₂ | 5700 | 23.0 | | | |
| SO₃ | 4500 | 27.6 | | | |
| SO₄ | 6800 | 31.6 | | | |
| F | 1000 | 18.0 | | | |
| F (disubstituted) | 850 | 20.0 | | | |
| F (trisubstituted) | 550 | 22.0 | | | |
| CF₂ (for perfluoro compounds) | 1020 | 23.0 | | | |
| CF₃ (for perfluoro compounds) | 1020 | 57.5 | | | |

A method of calculating the SP value will be described. For example, a hydrophobic site in a resin obtained by reacting a polyethylene glycol with a reaction product between 4 mol of a 2 mol EO-adduct of bisphenol A and 5 mol of terephthalic acid is a moiety constituted of the reaction product between a 2 mol EO-adduct of bisphenol A and terephthalic acid, and the method of calculating the SP value is as follows.

The reaction product is constituted of eight $CH_3$ ($\Delta e_i$ = 1,125, $\Delta v_i$ = 33.5), sixteen $CH_2$ ($\Delta e_i$ = 1,180, $\Delta v_i$ = 16.1), four quaternary carbons (C, $\Delta e_i$ = 350, $\Delta v_i$ = -19.2), thirteen phenylene groups ($\Delta e_i$ = 7,630, $\Delta v_i$ = 52.4), eight ether groups (O, $\Delta e_i$ = 800, $\Delta v_i$ = 3.8), and ten ester groups ($CO_2$, $\Delta e_i$ = 4, 300, $\Delta v_i$ = 18.0) . The values $\Sigma \Delta e_i$ and $\Sigma \Delta v_i$ of the reaction product are calculated from these numerical values, respectively, and by applying the resultants to the above expression (A), a SP value (11.5) can be calculated.

The SP value of the hydrophobic site of the second resin (B) is, from the viewpoint that the adhesion is good, preferably 10.8 (cal/cm$^3$)$^{1/2}$ or higher and more preferably 11.0 (cal/cm$^3$)$^{1/2}$ or higher, and preferably 11.5 (cal/cm$^3$)$^{1/2}$ or lower and more preferably 11.4 (cal/cm$^3$)$^{1/2}$ or lower. In the present description, the unit (cal/cm$^3$)$^{1/2}$ of the SP value is omitted and only a numerical value is described in some cases.

In the present invention, the acid value is a value obtained by titrating a sample dissolved in tetrahydrofuran with a 0.5 mol/L potassium hydroxide aqueous solution according to JIS K0070.

The acid value of the second resin (B) is, from the viewpoint that fluffing can be made little, preferably 2 mgKOH/g or higher and more preferably 4 mgKOH/g or higher, and preferably 19 mgKOH/g or lower and more preferably 18 mgKOH/g or lower. In the present description, the unit (mgKOH/g) of the acid value is omitted and only a numerical value is described in some cases.

The second resin (B) is preferably a resin having at least one oxyalkylene group, more preferably a resin having at least one oxyalkylene group and not having an epoxy group, and still more preferably an aromatic polyester resin having at least one oxyalkylene group and not having an epoxy group. The second resin (B) may have two or more oxyalkylene groups. When there are two or more oxyalkylene groups, they may be identical or may be different. In the present description, a compound in which two or more oxyalkylene groups are bonded continuously is also referred to as a polyoxyalkylene chain. In the below, the "(poly)oxyalkylene chain" includes an oxyalkylene group and a polyoxyalkylene chain.

The second resin (B) is, from the viewpoint of the sizing properties and making the fluffing little, preferably a polyester resin (B1) constituted of a dicarboxylic acid or its anhydride (b1) and a diol (b2), or a urethane resin (B2) constituted of a polyisocyanate (b3) and a diol (b2), more preferably an aromatic polyester resin having an oxyalkylene group, and still more preferably a polyester resin containing, as constituent monomers, a dicarboxylic acid or its anhydride (b1) and a diol (b21) having a bisphenol skeleton and a (poly)oxyalkylene chain. One type of the second resin (B) or a combination of two or more types thereof may be used.

Examples of the dicarboxylic acid or its anhydride (b1) constituting the polyester resin (B1) include an aliphatic dicarboxylic acid (b11), an aromatic dicarboxylic acid (b12) and their acid anhydride.

Examples of the aliphatic dicarboxylic acid (b11) include an acyclic saturated aliphatic dicarboxylic acid (b111), an acyclic unsaturated aliphatic dicarboxylic acid (b112), an alicyclic dicarboxylic acid (b113) and a dimer acid (b114).

Examples of the acyclic saturated aliphatic dicarboxylic acid (b111) include a straight or branched acyclic saturated aliphatic dicarboxylic acid having 2 to 22 carbon atoms (oxalic acid, malonic acid, succinic acid, glutaric acid, methylsuccinic acid, ethylsuccinic acid, dimethylmalonic acid, $\alpha$-methylglutaric acid, $\beta$-methylglutaric acid, 2,4-diethylglutaric acid, isopropylmalonic acid, adipic acid, pimelic acid, suberic acid, azelaic acid, sebacic acid, decanedicarboxylic acid, undecanedicarboxylic acid, dodecanedicarboxylic acid, tridecanedicarboxylic acid, tetradecanedicarboxylic acid, hexadecanedicarboxylic acid, octadecanedicarboxylic acid, icosanedicarboxylic acid, decylsuccinic acid, dodecylsuccinic acid, octadecylsuccinic acid and the like).

Examples of the acyclic unsaturated aliphatic dicarboxylic acid (b112) include a straight or branched acyclic unsaturated aliphatic dicarboxylic acid having 4 to 22 carbon atoms (maleic acid, fumaric acid, citraconic acid, mesaconic acid, dodecenylsuccinic acid, pentadecenylsuccinic acid, octadecenylsuccinic acid and the like).

Examples of the alicyclic dicarboxylic acid (b113) include an alicyclic dicarboxylic acid having 7 to 14 carbon atoms (1,3- or 1,2-cyclopentanedicarboxylic acid, 1,2-, 1,3- or 1,4-cyclohexanedicarboxylic acid, 1,2-, 1,3-or 1,4-cyclohexanediacetic acid, dicyclohexyl-4,4'-dicarboxylic acid and the like).

Examples of the dimer acid (b114) include a dimer of C8-C24 acyclic unsaturated aliphatic carboxylic acid (e.g., oleic acid, linoleic acid, and linolenic acid).

Examples of the aromatic dicarboxylic acid (b12) include a C8-C14 aromatic dicarboxylic acid (e.g., terephtalic acid, isophthalic acid, phthalic acid, phenylmalonic acid, phenylsuccinic acid, $\beta$-phenylglutaric acid, $\alpha$-phenyladipic acid, $\beta$-phenyladipic acid, biphenyl-2,2'- or 4,4'-dicarboxylic acid, naphthalenedicarboxylic acid, sodium 5-sulfoisophthalate, and potassium 5-sulfoisophthalate).

Examples of the anhydride of dicarboxylic acid include an anhydride of the aliphatic dicarboxylic acid (b11) and an anhydride of the aromatic dicarboxylic acid (b12), such as succinic anhydride, maleic anhydride, and phthalic anhydride.

One dicarboxylic acid or its anhydride (b1) may be used alone or two or more thereof may be used in combination.

In view of the sizing properties, preferred of these are the acyclic saturated aliphatic dicarboxylic acid (b111), the acyclic unsaturated aliphatic dicarboxylic acid (b112), and the aromatic dicarboxylic acid (b12); more preferred are oxalic acid, malonic acid, succinic acid, adipic acid, sebacic acid, maleic acid, fumaric acid, terephtalic acid, isophthalic acid, and phthalic acid; and particularly preferred are adipic acid, maleic acid, fumaric acid, terephtalic acid, and isophthalic acid.

When the polyester resin (B1) obtained from a dicarboxylic acid or its anhydride (b1) and a diol (b2) is a dicarboxylic acid having two carboxyl groups, it can be used as a dicarboxylic acid or its anhydride (b1) and reacted further with a diol (b2) to obtain a polyester resin (B1).

The diol (b2) constituting the polyester resin (B1) is, from the viewpoint of the sizing properties and making fluffing little, preferably a diol (b21) having a bisphenol skeleton and a (poly)oxyalkylene chain, or a polyethylene glycol (b22).

One diol (b2) may be used alone or two or more thereof may be used in combination.

Examples of a bisphenol compound constituting the bisphenol skeleton in the diol (b21) having a bisphenol skeleton and a (poly)oxyalkylene chain include bisphenol A, bisphenol F and bisphenol S.

In the diol (b21) having a bisphenol skeleton and a (poly)oxyalkylene chain, the number of repeating units of oxyalkylene group constituting the (poly)oxyalkylene chain is, from the viewpoint of making fluffing little, preferably 2 to 100 and more preferably 2 to 80.

Examples of the polyoxyalkylene chain of the diol (b21) having a bisphenol skeleton and the (poly)oxyalkylene chain include a polyoxyethylene chain, a polyoxypropylene chain and a polyoxybutylene chain, and examples of the oxyalkylene group include an oxyethylene group, an oxypropylene group and an oxybutylene group.

The diol (b21) having a bisphenol skeleton and a (poly)oxyalkylene chain is preferably an AO adduct of bisphenol A, an AO adduct of bisphenol F and an AO adduct of bisphenol S, and more preferably an AO adduct of bisphenol A and an AO adduct of bisphenol F, from the viewpoint of the sizing properties.

Examples of the polyisocyanate (b3) constituting the polyurethane resin (B2) include an aromatic diisocyanate having 8 to 30 carbon atoms [2,4'-, or 4,4'-diphenylmethane diisocyanate (MDI), 2,4- or 2,6-tolylene diisocyanate (TDI, toluene diisocyanate), 4,4'-dibenzyl diisocyanate, 1,3-, or 1,4-phenylene diisocyanate, 1,5-naphtylene diisocyanate, xylylene diisocyanate and the like]; an aliphatic diisocyanate having 4 to 30 carbon atoms [ethylene diisocyanate, hexamethylene diisocyanate (HDI), lysine diisocyanate and the like]; alicyclic diisocyanates having 6 to 30 carbon atoms [isophorone diisocyanate (IPDI), 4,4'-dicyclohexylmethane diisocyanate and the like]; and a mixture of two or more types of these.

Examples of the diol (b2) constituting the polyurethane resin (B2) include the same as the diol (b2) constituting the above polyester resin (B1), and preferable ones are the same.

The HLB value of the second resin (B) is preferably 5 or higher, more preferably 6 or higher and still more preferably 8 or higher, and preferably 16 or lower, more preferably 15 or lower and still more preferably 13 or lower.

The HLB (Hydrophile-Lipophile Balance) represents the balance between hydrophilicity and hydrophobicity, and the HLB value is determined from the following expression (1) (see "Synthesis of Surfactants and their Applications", p. 501, 1957, published by Maki Shoten Publishing Co., Ltd.; "Introduction to Surfactants", pp. 212-213, 2007, published by Sanyo Chemical Industries, Ltd.; and the like).

$$\text{HLB value} = 10 \times (\text{inorganic value/organic value}) \ldots (1)$$

In the expression (1), a ratio of an inorganic value to an organic value of an organic compound is indicated in parentheses, and the ratio can be calculated from values described in the above literatures. In the case of using two or more types of compounds as the second resin (B), the HLB of the second resin (B) can be calculated by the weighted average.

The viscosity of the second resin (B) at 100°C is preferably 0.5 to 50 Pa-s, more preferably 1 to 30 Pa-s, particularly preferably 3 to 20 Pa-s.

A viscosity in the range of 0.5 to 50 Pa-s results in better sizing properties and higher emulsification stability. Herein, the viscosity of the second resin (B) at 100°C is measured using a Brookfield Viscometer (BL type) in accordance with JIS K 7117-1:1999 (corresponding to ISO 2555:1990).

Preferably, the second resin (B) has a number average molecular weight (hereinafter abbreviated to "Mn") of 1,000 to 50,000. An Mn of 1,000 or more results in sufficient sizing properties. An Mm or 50,000 or less results in high affinity to water and excellent emulsification stability.

Then, the Mn is measured by GPC (gel permeation chromatography). The Mn is more preferably 1,500 to 30,000, particularly preferably 2,000 to 20,000. An Mn in these ranges results in better sizing properties and higher affinity to water.

GPC conditions for measurement of the Mn of the second resin (B) are as follows, for example.

Model: Alliance (liquid chromatograph available from Waters Corporation, Japan)
Column: Guardcolumn Super H-L

+TSK gel Super H4000
+TSK gel Super H3000
+TSK gel Super H2000 (all available from Tosoh Corporation)
Column temperature: 40°C

Detector: RI (Refractive Index)
Eluent: tetrahydrofuran
Eluent flow rate: 0.6 ml/min
Sample concentration: 0.25 wt%
Amount to be injected: 10 ul
Reference substance: polystyrene (TSK Standard Polystyrene available from Tosoh Corporation)

Examples of the method of producing the second resin (B) include a method in which the dicarboxylic acid or its anhydride (b1) and the diol (b2) are mixed in a predetermined molar ratio and stirred at a reaction temperature of 100°C to 250°C and at a pressure of -0.1 to 1.2 MPa to distill off water.

The charging molar ratio (a molar number of the dicarboxylic acid or its anhydride (b1)/a molar number of the diol (b2)) of the dicarboxylic acid or its anhydride (b1) and the diol (b2) is, from the viewpoint of making the Mn in the above range and improving the sizing properties, preferably 0.7 to 1.5 and more preferably 0.8 to 1.25.

Preferably, the production of the second resin (B) includes adding a catalyst in an amount of 0.05 to 0.5 wt% based on the weight of polyester. Examples of the catalyst include para-toluenesulfonic acid, dibutyltin oxide, tetraisopropoxy titanate, and potassium oxalate titanate. In view of the reactivity and the environmental impact, tetraisopropoxy titanate and potassium oxalate titanate are preferred, and potassium oxalate titanate is more preferred.

In the present invention, it is preferable that the first resin (A) has at least one epoxy group and the second resin (B) does not have an epoxy group. Above all, it is more preferable that the first resin (A) has at least one (meth)acryloyl group and at least one epoxy group, and the second resin (B) is an aromatic polyester resin having at least one oxyalkylene group and not having an epoxy group.

It is preferable that the fiber sizing agent composition of the present invention further contains a nonionic surfactant (C) in addition to the first resin (A) and the second resin (B).

The nonionic surfactant (C) may be blended for the purpose of emulsifying a mixture of the first resin (A) and the second resin (B). One type of the nonionic surfactant (C) or a combination of two or more types thereof may be used. The nonionic surfactant (C) may be used for any of the purpose of emulsifying the second resin (B) in the first resin (A), the purpose of emulsifying the first resin (A) in the second resin (B), and the purpose of emulsifying a mixture containing the first resin (A) and the second resin (B) in water.

Examples of the nonionic surfactant (C) include an alkylene oxide adduct of alkylphenols (whose alkyl group is preferably an alkyl group having 9 to 15 carbon atoms), an alkylene oxide adduct of arylalkylphenols (whose alkyl group is preferably an alkyl group having 2 to 10 carbon atoms and which phenol includes styrenated phenol, styrenated cumylphenol and styrenated cresol), and a Pluronic®-type surfactant. Among these, the alkylene oxide adduct of arylalkylphenols is preferable and an alkylene oxide adduct of stryrenated phenol is more preferable.

The fiber sizing agent composition of the present invention may contain other components other than the first resin (A), the second resin (B) and the nonionic surfactant (C). Examples of the other components include an epoxy resin (D) excluding the first resin (A), a resin (E) excluding the first resin (A), the second resin (B) and the epoxy resin (D), a surfactant (anionic surfactant, cationic surfactant, amphoteric surfactant, and the like) excluding the nonionic surfactant (C), and an additive (e.g., smoothing agent, preservative, antioxidant, and the like). One of these other components may be used alone, or two or more thereof may be used in combination.

The epoxy resin (D) (referred to also as (D) component) is not especially limited, but examples thereof include an epoxy resin not having a (meth)acryloyl group. Examples of such epoxy resin include an "epoxy resin (A) having an aromatic ring and not having a (meth)acryloyl group" described in International Publication No. WO2020/027126. The "(meth)acryloyl group" means an acryloyl group and a methacryloyl group.

The (D) component is, among the epoxy resin described in the above gazette, a diglycidyl ether of a dihydric phenol, especially preferably a diglycidyl ether of a bisphenol (bisphenol F, bisphenol A, bisphenol B, bisphenol AD, bisphenol S, halogenated bisphenol A or the like), and most preferably a diglycidyl ether of bisphenol A (bisphenol A epoxy resin).

Examples of the resin (E) include a compound having two or more (meth)acryloyl groups. Examples of such a compound include a bifunctional aromatic (meth)acrylate (E11) not having an oxyalkylene group in its molecule, a trifunctional nonaromatic (meth)acrylate (E12) not having an oxyalkylene group in its molecule, a bifunctional (meth)acrylate (E21) having an oxyalkylene group in its molecule, and a trifunctional (meth)acrylate (E22) having an oxyalkylene group in its molecule.

Examples of the bifunctional aromatic (meth)acrylate (E11) not having an oxyalkylene group in its molecule include a di-esterified product of diglycidyl ether of dihydric phenol and (meth)acrylic acid. Examples thereof include bisphenol (bisphenol F, bisphenol A, bisphenol B, bisphenol AD, bisphenol S, halogenated bisphenol A or the like) diglycidyl ether di(meth)acrylate, catechin diglycidyl ether di(meth)acrylate, resorcinol diglycidyl ether di(meth)acrylate, hydroquinone diglycidyl ether di(meth)acrylate, 1,5-dihydroxynaphthalene diglycidyl ether di(meth)acrylate, dihydroxybiphenyl diglycidyl ether di(meth)acrylate, octachloro-4,4'-dihydroxybiphenyl diglycidyl ether di(meth)acrylate, tetramethylbiphenyl diglycidyl ether di(meth)acrylate, and 9,9'-bis(4-hydroxyphenyl)fluorene diglycidyl ether di(meth)acrylate.

Examples of the trifunctional nonaromatic (meth)acrylate (E12) not having an oxyalkylene group in its molecule include a tri-esterified product obtained from C2-C20 trihydric or higher (preferably tri- to octa-hydric) alcohols and (meth)acrylic acid.

Examples thereof include trimethylolethane tri(meth)acrylate, trimethylolpropane tri(meth)acrylate, pentaerythritol tri(meth)acrylate, dipentaerythritol tri(meth)acrylate, and sorbitol tri(meth)acrylate.

Examples of the bifunctional (meth)acrylate (E21) having an oxyalkylene group in its molecule include a di-esterified product obtained from (meth)acrylic acid and an AO adduct of a dihydric or higher (preferably di- to octa-hydric) alcohol [diacrylate of polyoxypropylene glycol, polytetramethylene glycol diacrylate, di(meth)acrylate of AO adduct of ethylene glycol, di(meth)acrylate of AO adduct of 1,2- or 1,3-propanediol, di(meth)acrylate of AO adduct of trimethylolpropane, di(meth)acrylate of AO adduct of glycerol, and the like]; a di-esterified product obtained from (meth)acrylic acid and an AO adduct of a dihydric alcohol or dihydric phenol [di(meth)acrylate of AO adduct of bisphenol A, and the like]; and an epoxy acrylate obtained from a reaction between acrylic acid and diglycidyl ether of AO adduct of a dihydric alcohol or dihydric phenol [Epoxy Ester 40EM, Epoxy Ester 70PA, Epoxy Ester 200PA, Epoxy Ester 3002M, Epoxy Ester 3002A (all, manufactured by Kyoeisha Chemical Co., Ltd.), and the like]. In these compounds, not all hydroxyl groups of the polyhydric alcohol are required to undergo reaction with (meth)acrylic acid and/or AO or the like, and some hydroxyl groups may remain unreacted. Examples of the AO include those having two to four carbon atoms, and specific examples thereof include EO, PO, 1,2-BO, and 1,4-BO. The number of moles of added AO is preferably 2 to 100, more preferably 3 to 50, in view of the sizing properties and in order to improve the adhesion between fibers and the matrix resin.

Examples of the trifunctional (meth)acrylate (E22) having an oxyalkylene group in its molecule include a tri-esterified product obtained from AO adduct of a trihydric or higher (preferably tri- to octa-hydric) alcohol and (meth)acrylic acid. Examples thereof include a tri(meth)acrylate of PO adduct of glycerol and a tri(meth)acrylate of EO adduct of trimethylolpropane. The AO contained in these compounds includes one having 2 to 4 carbon atoms, and specifically includes EO, PO, 1,2-BO, and 1,4-BO. The number of moles of added AO is preferably 2 to 100, more preferably 3 to 50, in view of the sizing properties and improvement of the adhesion between fibers and the matrix resin.

Among these, preferable is the bifunctional aromatic (meth)acrylate (E11) not having an oxyalkylene group in its molecule; more preferable is a di-esterified product of a diglycidyl ether of a dihydric phenol and (meth)acrylic acid; and still more preferable is a compound in which (meth)acrylic acids are added to both ends of a diglycidyl ether of a bisphenol diol.

Examples of the surfactant excluding the nonionic surfactant (C) include a sulfate ester salt of alkylene oxide adduct of alkylphenol, a sulfate ester salt of alkylene oxide adduct of arylalkylphenol, a urethane based on Pluronic®-type surfactant, a urethane based on alkylene oxide adduct of arylalkylphenol and polyethylene glycol, and a mixture of these. One of these may be used alone or two or more thereof may be used in combination.

Examples of the smoothing agent include wax (e.g., polyethylene, polypropylene, oxidized polyethylene, oxidized polypropylene, modified polyethylene, and modified polypropylene), higher fatty acid (C6-C30 fatty acid) alkyl (C1-C24 alkyl) ester (e.g., methyl stearate, ethyl stearate, propyl stearate, butyl stearate, octyl stearate, and stearyl stearate), higher fatty acid (C6-C30 fatty acids) (e.g., myristic acid, palmitic acid, and stearic acid), natural fats and oil (e.g., coconut oil, beef tallow, olive oil, and rapeseed oil), and liquid paraffin.

Examples of the preservative include benzoic acid, salicylic acid, sorbic acid, quaternary ammonium salt, and imidazole.

Examples of the antioxidant include phenol (e.g., 2,6-di-t-butyl-p-cresol), thiodipropionate (e.g., dilauryl 3,3'-thiodipropionate), and phosphite (e.g., triphenylphosphite).

The content of each component contained in the fiber sizing agent composition of the present invention is as follows, respectively.

From the viewpoint of improvement of the adhesion between the fibers and the matrix resin, the weight percentage of the first resin (A) is preferably 10 to 90 wt%, more preferably 20 to 80 wt% and especially preferably 25 to 75 wt%, based on the weight of solids contained in the fiber sizing agent composition. Here, the solid content is a residue after 1 g of a sample is heated and dried in a circulating air dryer at 130°C for 45 min.

From the viewpoint of the sizing properties, the weight percentage of the second resin (B) is preferably 10 to 90 wt%, more preferably 20 to 80 wt% and especially preferably 25 to 75 wt%, based on the weight of solids contained in the fiber sizing agent composition.

The weight ratio (the weight of the first resin (A)/the weight of the second resin (B)) between the first resin (A) and the second resin (B) is, from the viewpoint that the change over time can be made small and the adhesion between the fibers and the matrix resin is improved, preferably 20/80 or higher and more preferably 30/70 or higher, and preferably 90/10 or lower and more preferably 80/20 or lower.

The weight percentage of the nonionic surfactant (C) is preferably 0.1 to 40 wt%, more preferably 0.5 to 35 wt%, particularly preferably 1 to 30 wt%, based on the weight of solids of the fiber sizing agent composition, from the viewpoint of the emulsification stability.

From the viewpoint of the sizing properties, the weight percentage of the (D) component is preferably 5 to 40 wt%, more preferably 10 to 35 wt% and especially preferably 25 to 30 wt%, based on the weight of solids contained in the fiber sizing agent composition.

The weight percentage of the other additives such as the smoothing agent, the preservative, and the antioxidant is preferably 0.01 to 20 wt%, more preferably 0.05 to 15 wt%, particularly preferably 0.1 to 10 wt%, respectively, based on the weight of solids of the fiber sizing agent composition, in view of the fluidity and the stability over time.

Preferably, the fiber sizing agent composition of the present invention contains an aqueous medium so that it can be provided in the form of an aqueous solution or aqueous emulsion.

The presence of the aqueous medium makes it easy to suitably adjust the amount of solids of the fiber sizing agent composition to be attached to fibers. Thus, the resulting fiber bundle can further increase the strength of a molded article of a composite material.

The aqueous medium can be a known aqueous medium, for example. Specific examples thereof include water and a hydrophilic organic solvent (C1-C4 monovalent alcohol (e.g., methanol, ethanol, and isopropanol), C3-C6 ketone (e.g., acetone, ethyl methyl ketone, and methyl isobutyl ketone), C2-C6 glycol (ethylene glycol, propylene glycol, diethylene glycol, and triethylene glycol) and monoalkyl (C1-C2) ether of these, dimethylformamide, and C3-C5 alkyl acetate (e.g., methyl acetate and ethyl acetate)).

Two or more of these may be used in combination. Preferred of these are water and a mixture of water and at least one of the hydrophilic organic solvents, and more preferred is water, in view of the safety and the like.

In view of the cost and the like, preferably, the fiber sizing agent composition of the present invention is of high concentration during distribution and is of low concentration during production of fiber bundles. Specifically, high concentration during distribution makes it possible to reduce the transport cost, storage cost, and the like, while low concentration for fiber treatment makes it possible to produce fiber bundles capable of increasing the strength of a molded article of a composite material.

The concentration of an aqueous solution or emulsion of high concentration (weight percentage of solids relative to the fiber sizing agent composition) is preferably 20 to 80 wt%, more preferably 30 to 70 wt%, in view of the storage stability and the like.

The concentration of an aqueous solution or emulsion of low concentration (weight percentage of solids relative to the fiber sizing agent composition) is preferably 0.5 to 20 wt%, more preferably 1 to 10 wt%, in order to suitably adjust the amount of the fiber sizing agent during production of fiber bundles, for example.

The fiber sizing agent composition of the present invention can be produced by mixing the first resin (A) and the second resin (B), and as required, the nonionic surfactant (C), the epoxy resin (D), an aqueous medium and other additives in any order. When an aqueous medium is to be added, a preferred method is one in which the components other than the aqueous medium are pre-mixed, and the resulting mixture is mixed with the aqueous medium to dissolve or emulsify and disperse the mixture in the aqueous medium.

The temperature during pre-mixing of the components other than the aqueous medium is preferably 20°C to 90°C, more preferably 40°C to 90°C, in order to facilitate mixing. The same temperature ranges apply to subsequent dissolution or emulsification and dispersion.

The duration for dissolution or emulsification and dispersion is preferably 1 to 20 hours, more preferably 2 to 10 hours.

Any mixer, dissolver, and emulsifier disperser can be used. Examples thereof include a stirring blade (blade shape: ore, three blade paddle, or the like), a Nauta mixer, a ribbon mixer, a conical blender, a mortar mixer, a universal mixer (e.g., a universal mixer and stirrer "5DM-L" available from San-ei Manufacturing Co., Ltd.), and a Henschel mixer.

Examples of fibers to which the fiber sizing agent composition of the present invention is applicable include a known fiber (e.g., those described in WO 2003/47830) such as a glass fiber, a carbon fiber, an aramid fiber, a ceramic fiber, a metal fiber, a mineral fiber, a rock fiber, and a slag fiber. Preferred is at least one type of fibers selected from the group consisting of a carbon fiber, a glass fiber, an aramid fiber, a ceramic fiber, a metal fiber, a mineral fiber, and a slag fiber, and more preferred are a carbon fiber, in view of improvement of the strength of a molded article of a composite material. Two or more types of these fibers may be used in combination.

[Fiber bundle]

The fiber bundle of the present invention is a fiber bundle obtained by treating at least one type of fibers selected from the group consisting of carbon fibers, glass fibers, aramid fibers, ceramic fibers, metal fibers, mineral fibers and slag fibers with the fiber sizing agent composition of the present invention. The fiber bundle is preferably one made by bundling about 3,000 to 50,000 fibers.

That is, the fiber bundle of the present invention contains: at least one type of fibers selected from the group consisting of carbon fibers, glass fibers, aramid fibers, ceramic fibers, metal fibers, mineral fibers and slag fibers; the first resin (A) having at least one first functional group selected from the group consisting of a vinyl group, a vinylene group and a sulfanyl group, and at least one second functional group selected from the group consisting of an epoxy group, an amino group and an oxazolin-2-yl group, and/or a reaction product of the first resin (A); and the second resin (B) being a resin other than the first resin (A) and having a hydrophobic site with an SP value of 10.6 to 11.6 $(cal/cm^3)^{1/2}$ and having an acid value of 0 to 20 mgKOH/g, and/or a reaction product of the second resin (B). The reaction product of the first resin (A) includes a reaction product obtained from a reaction between the first resins (A) and/or a reaction product obtained from a reaction between the first resin (A) and a fiber. The reaction product of the second resin (B) includes a reaction product obtained from a reaction between the second resin (B) and the first resin (A) and/or a reaction product obtained from a reaction between the second resin (B) and a fiber.

Examples of the reaction product obtained from a reaction between the first resin (A) and a fiber include a reaction product obtained from a reaction between the first resin (A) and a carbon fiber (a carbon fiber with a carboxyl group, a hydroxyl group, and the like).

Examples of the reaction product obtained from a reaction between the second resin (B) and a fiber include a reaction product obtained from a reaction between the second resin (B) and a carbon fiber (a carbon fiber with a carboxyl group and the like). Here, the reaction product between the second resin (B) and the first resin (A) is obtained from the first resin (A), but in the present description, is included as a reaction product of the second resin (B).

Spraying and immersion may be used in treatment of fibers. The amount (wt%) of solids of the fiber sizing agent composition to be attached to fibers is preferably 0.05 to 5 wt%, more preferably 0.2 to 2.5 wt%, based on the weight of the fibers. The amount within the above range can further increase the strength of a molded article of a composite material.

The weight ratio of the first resin (A) and the reaction product of the first resin (A) contained in the fiber bundle to the second resin (B) and the reaction product of the second resin (B) contained in the fiber bundle [(the weight of the first resin (A) and the reaction product of the first resin (A))/(the weight of the second resin (B) and the reaction product of the second resin (B))] is, from the viewpoint of the sizing properties and improvement of the adhesion between the fibers and the matrix resin, preferably 10/90 to 90/10 and more preferably 20/80 to 80/20.

In order to improve the adhesion between the fibers and the matrix resin, the weight percentage of the first resin (A) and the reaction product of the first resin (A) in the fiber bundle is preferably 0.0005 to 4.5 wt%, more preferably 0.002 to 4 wt%, still more preferably 0.0025 to 3.75 wt%, yet still more preferably 0.005 to 3 wt%, further still preferably 0.01 to 2.5 wt%, particularly preferably 0.02 to 2 wt%, based on the weight of the fibers.

In order to improve the adhesion between the fibers and the matrix resin, the weight percentage of the second resin (B) and the reaction product of the second resin (B) in the fiber bundle is preferably 0.0005 to 4.5 wt%, more preferably 0.002 to 4 wt%, still more preferably 0.0025 to 3.75 wt%, yet still more preferably 0.005 to 2.25 wt%, further still preferably 0.01 to 2 wt%, particularly preferably 0.02 to 1.875 wt%, based on the weight of the fibers.

From the viewpoint of improvement of the adhesion between the fibers and the matrix resin, the weight percentage of the nonionic surfactant (C) in the fiber bundle is preferably 0.00005 to 2 wt%, more preferably 0.0002 to 1.75 wt%, still more preferably 0.00025 to 1.5 wt%, further still more preferably 0.0005 to 1 wt%, further still more preferably 0.001 to 0.875 wt% and especially preferably 0.002 to 0.75 wt%, based on the weight of the fibers.

[Fiber product]

The fiber product of the present invention contains the fiber bundle. Examples thereof include a fiber product obtained by processing the fiber bundle, such as a woven fabric, a knitted fabric, a nonwoven fabric (e.g., felt, mats, and paper), a chopped fiber, and a milled fiber.

[Composite material]

The composite material of the present invention contains the fiber bundle and/or fiber product of the present invention, and a matrix resin. The matrix resin may be a thermoplastic resin or a thermosetting resin.

Examples of the thermoplastic resin include polyethylene, polypropylene, polyethylene terephthalate, polybutylene terephthalate, polyamide, polystyrene, polyethersulfone, acrylonitrile-styrene resin, acrylonitrile-butadiene-styrene resin, acrylic resin, polycarbonate, polyetherimide, polyetheretherketone, polyacetal, polyphenylene oxide, and polyphenylene sulfide.

Examples of the thermosetting resin include epoxy resin, unsaturated polyester resin, and vinyl ester resin. When the matrix resin is a thermosetting resin, the composite material may contain a catalyst. Any known catalyst can be used without limitations. For example, when the thermosetting resin is an epoxy resin, one described in JP 2005-213337 A may be used.

The weight ratio of the matrix resin to the fiber bundle and the fiber product [(the weight of the matrix resin)/(the total weight of the fiber bundle and the fiber product)] is, from the viewpoint of the strength of a composite material to be molded, preferably 10/90 to 90/10, more preferably 20/80 to 70/30 and especially preferably 30/70 to 60/40.

When the composite material contains the catalyst, the catalyst content relative to the matrix resin is preferably 0.01 to 10 wt%, more preferably 0.1 to 5 wt%, particularly preferably 1 to 3.

When the matrix resin is a thermoplastic resin, the composite material of the present invention can be produced by, for example, a method that includes impregnating the fiber product of the present invention (e.g., woven fabric, knitted fabric, or nonwoven fabric) with a thermally melted (preferred melting temperature: 60°C to 150°C) matrix resin or a matrix resin diluted with a solvent (e.g., acetone, methyl ethyl ketone, methyl isobutyl ketone, toluene, xylene, or ethyl acetate), or a method that includes introducing the fiber bundle of the present invention or chopped fibers obtained by cutting the fiber bundle of the present invention into the thermoplastic matrix resin, kneading and mixing to obtain a mixture, and injection-molding the mixture.

When the matrix resin is a thermosetting resin, the composite material can be produced by heat-molding a mixture of the components and solidifying at room temperature. Although the composite material is not required to be completely cured, preferably, it is cured to an extent that allows the molded composite material to maintain its shape. The molded composite material may be further heated to be completely cured.

EXAMPLES

Hereinafter, the present invention is described in further detail with reference to Examples and Comparative Examples, but the present invention is not limited thereto. Hereinafter, "%" means "wt%", and "part(s)" means part(s) by weight, unless otherwise specified.

<Production Example 1: production of a first resin (A-1)>

A reaction vessel equipped with a thermometer, a stirrer and an air introduction tube was charged with 475 parts (0.5 mol) of a bisphenol A epoxy resin [trade name: "JER1001", manufactured by Mitsubishi Chemical Corp., epoxy equivalent: 475 (g/eq)], and heated up to 100°C under stirring in an air atmosphere. Then, 0.2 part of benzyldimethylamine and 36 parts (0.5 mol) of acrylic acid were dropped over 1 hour, and allowed to react at 100°C under stirring in an air atmosphere until the acid value became 1 or lower, to thereby obtain a first resin (A-1). The epoxy equivalent of the first resin (A-1) (bisphenol A epoxy resin having terminated with an acrylate at one end) was 1,020 g/eq.

<Production Example 2: production of a first resin (A-2)>

A first resin (A-2) was obtained as in Production Example 1, except that 475 parts of the bisphenol A epoxy resin [trade name: "JER1001", manufactured by Mitsubishi Chemical Corp., epoxy equivalent: 475 (g/eq)] in Production Example 1 was replaced by 900 parts (0.5 mol) of a bisphenol A epoxy resin [trade name: "JER1004", manufactured by Mitsubishi Chemical Corp., epoxy equivalent: 900 (g/eq)]. The epoxy equivalent of the first resin (A-2) (bisphenol A epoxy resin terminated with an acrylate at one end) was 1,870 g/eq.

<Production Example 3: production of a first resin (A-3)>

A first resin (A-3) was obtained as in Production Example 1, except that 475 parts of the bisphenol A epoxy resin [trade name: "JER1001", manufactured by Mitsubishi Chemical Corp., epoxy equivalent: 475 (g/eq)] in Production Example 1 was replaced by 240 parts (0.5 mol) of a bisphenol A epoxy resin [trade name: "JER834", manufactured by Mitsubishi Chemical Corp., epoxy equivalent: 240 (g/eq)]. The epoxy equivalent of the first resin (A-3) (bisphenol A epoxy resin terminated with an acrylate at one end) was 550 g/eq.

<Production Example 4: production of a first resin (A-4)>

A first resin (A-4) was obtained as in Production Example 1, except that 475 parts of the bisphenol (A) epoxy resin [trade name: "JER1001", manufactured by Mitsubishi Chemical Corp., epoxy equivalent: 475 (g/eq)] in Production Example 1 was replaced by 950 parts (0.5 mol) of a bisphenol F epoxy resin [trade name: "JER4005P", manufactured by Mitsubishi Chemical Corp., epoxy equivalent: 950 (g/eq)]. The epoxy equivalent of the first resin (A-4) (bisphenol F epoxy resin terminated with an acrylate at one end) was 1,970 g/eq.

<Production Example 5: production of a first resin (A-5)>

A first resin (A-5) was obtained as in Production Example 1, except that 475 parts of the bisphenol (A) epoxy resin [trade name: "JER1001", manufactured by Mitsubishi Chemical Corp., epoxy equivalent: 475 (g/eq)] in Production Example 1 was replaced by 180 parts (0.2 mol) of a phenol novolac epoxy resin [trade name: "JER154", manufactured by Mitsubishi Chemical Corp., epoxy equivalent: 180 (g/eq)]. The epoxy equivalent of the first resin (A-5) (diacrylate of the phenol novolac epoxy resin (2 nuclei among 5.7 nuclei were acrylated)) was 430 g/eq.

<Production Example 6: production of a first resin (A-6)>

a reaction tank installed with a stirrer, a temperature control device and a wet crusher (attached outside the reaction tank) were charged with 266 parts (0.5 mol) of a 5 mol PO-adduct of bisphenol A [trade name: "Newpol BP-5", manufactured by Sanyo Chemical industries, Ltd., hydroxyl value: 211], 100 parts of epichlorohydrin, and 0.01 part of benzyltrimethylammonium chloride; the atmosphere in the reaction tank was made to be a nitrogen atmosphere; 118 parts of granular potassium hydroxide in a nitrogen atmosphere at 20°C was intermittently dropped at 19 to 31°C over 10 hours, and allowed to react at 26 to 29°C for 4 hours for glycidyl-etherification. The wet crusher was operated continuously from the start of the dropping of potassium hydroxide until the finish of the reaction.

The content was cooled to 21°C and thereafter, 400 parts of water at 24°C was charged. The temperature of the content at this time was controlled so as to become 22 to 27°C. Then, the resultant was allowed to stand still for separation; a lower layer (water layer) was taken out and to the remaining upper layer (organic layer), 2.5 parts of "Kyowaad 600" (manufactured by Kyowa Chemical Industry Co., Ltd., an alkali absorbent) was charged; the temperature was raised up to 120°C under reduced pressures to distil away epichlorohydrin; the temperature was raised up to 120°C under reduced pressure to distil away epichlorohydrin thereafter, the resultant was filtered to thereby obtain 358 parts of a diglycidylated product, having an epoxy equivalent of 323 g/eq, of a 5 mol propylene oxide-adduct of bisphenol A.

A reaction vessel equipped with a thermometer, a stirrer and an air introduction tube was charged with 323 parts of the obtained diglycidylated product of a 5 mol PO-adduct of bisphenol A, and heated up to 100°C under stirring in an air atmosphere. Then, 0.2 part of benzyldimethylamine and 36 parts of acrylic acid were dropped over 1 hour, and allowed to react at 100°C under stirring in an air atmosphere until the acid value became 1 or lower, to thereby obtain a first resin (A-6). The epoxy equivalent of the first resin (A-6) (monoacrylate of a PO adduct of glycidylated bisphenol A) was 646 g/eq.

<Production Example 7: production of an intermediate (M7)>

In a glass reaction vessel, 1,264 parts (4 mol parts) of a 2 mol EO-adduct of bisphenol A [trade name: "Newpol BPE-20", manufactured by Sanyo Chemical industries, Ltd.], 830 parts (5 mol parts) of terephthalic acid and 2 parts of tetraisopropoxy titanate were allowed to react for 15 hours while the pressure was reduced to 0.001 MPa and water was distilled away at 170°C. Then, 515 parts (0.97 mol parts) of a 5 mol PO-adduct of bisphenol A [trade name: "Newpol BP-5", manufactured by Sanyo Chemical industries, Ltd., hydroxyl value: 211] was further added thereto and allowed to react for 10 hours while the pressure was reduced to - 0.1 MPa and water was distilled away at 180°C, to thereby obtain an intermediate (M7). The number-average molecular weight of the intermediate (M7) was 1,460.

<Production Example 8: production of a first resin (A-7)>

A first resin (A-7) was obtained as in Production Example 6, except that 266 parts of a 5 mol PO-adduct of bisphenol A [trade name: "Newpol BP-5", manufactured by Sanyo Chemical industries, Ltd., hydroxyl value: 211] in Production Example 6 was replaced by 730 parts of the intermediate (M7) obtained in Production Example 7. The epoxy equivalent of the first resin (A-7) (acrylate of an aromatic polyester having an epoxy group) was 1,530 g/eq.

<Production Example 9: production of a first resin (A-8)>

A first resin (A-8) was obtained as in Production Example 1, except that 36 parts of acrylic acid in Production Example 1 was replaced by 43 parts of methacrylic acid. The epoxy equivalent of the first resin (A-8) (monomethacrylate of a bisphenol A epoxy resin) was 1,040 g/eq.

<Production Example 10: production of a first resin (A-9)>

A first resin (A-9) (fumarate of a bisphenol A epoxy resin) was obtained as in Production Example 1, except that 36 parts of acrylic acid in Production Example 1 was replaced by 29 parts of fumaric acid. The epoxy equivalent of the first resin (A-9) was 533 g/eq, and the vinylene equivalent was 1,066 g/eq. Here, the vinylene equivalent was obtained from H-NMR and GPC analysis.

<Production Example 11: production of a first resin (A-10)>

In a glass reaction vessel, 1,022 parts (7 mol parts) of adipic acid, 480 parts (8 mol parts) of ethylenediamine and 2 parts of tetraisopropoxy titanate were allowed to react for 15 hours while the pressure was reduced to 0.001 MPa and water was distilled away at 170°C, and cooled to 110°C. Then, 0.2 part of benzyldimethylamine and 43 parts

(0.5 mol) of methacrylic acid were dropped over 1 hour and allowed to react at 110°C in an air atmosphere under stirring until the acid value became 1 or lower, to thereby obtain a first resin (A-10) (amide of a polyamide containing amino groups at both ends and methacrylic acid). The amine value of the first resin (A-10) was 92.4 mgKOH/g. Here, the amine value was a value measured according to JIS K7237 (the same applies to the below).

<Production Example 12: production of a first resin (A-11)>

In a reaction vessel equipped with a thermometer, a stirrer and an air introduction tube, 2,220 parts of an oxazolin-2-yl group-containing reactive polystyrene [trade name: "PX3-RP-37", manufactured by Nippon Shokubai Co., Ltd., oxazoline equivalent: 740 (g/eq)] was charged, and heated up to 110°C under slow stirring to be homogeneously dissolved. Then, 86 parts of methacrylic acid was dropped over 1 hour, and allowed to react at 110°C under stirring in an air atmosphere until the acid value became 1 or lower, to thereby obtain a first resin (A-11) (resin having a vinyl group and an oxazolin-2-yl group). The content of oxazoline in the first resin (A-11) was 0.87 mmol/g. Here, the oxazoline content was a calculation value obtained by subtracting the content of the functional group of methacrylic acid from a numerical value described in a catalog.

<Production Example 13: production of a second resin (B-1)>

In a glass reaction vessel, 1,264 parts (4 mol parts) of a 2 mol EO-adduct of bisphenol A [trade name: "Newpol BPE-20", manufactured by Sanyo Chemical industries, Ltd.], 830 parts (5 mol parts) of terephthalic acid and 2 parts of tetraisopropoxy titanate were allowed to react for 15 hours while the pressure was reduced to 0.001 MPa and water was distilled away at 170°C. Then, 1,928 parts (0.97 mol part) of a polyethylene glycol (b2-1)[trade name: "PEG-2000", manufactured by Sanyo Chemical Industries, Ltd., hydroxyl value: 56] was further added thereto and allowed to react for 10 hours while the pressure was reduced to -0.1 MPa and water was distilled away at 180°C, to thereby obtain 3,800 parts of a second resin (B-1) (polyester resin). The number-average molecular weight of the second resin (B-1) was 4,000; the SP value of a hydrophobic site was 11.5; the acid value was 14; and the HLB value was 10.2. A hydrophobic compound constituting the hydrophobic site of the second resin (B-1) was a reaction product between the 2 mol EO-adduct of bisphenol A and terephthalic acid.

<Production Example 14: production of a second resin (B-2)>

A second resin (B-2) (polyester resin) was obtained as in Production Example 13, except that 1,264 parts (4 mol parts) of the 2 mol EO-adduct of bisphenol A [trade name: "Newpol BPE-20"] in Production Example 13 was replaced by 1,608 parts (4 mol parts) of a 3 mol PO-adduct of bisphenol A [trade name: "Newpol BP-3P", manufactured by Sanyo Chemical industries, Ltd.]. The number-average molecular weight of the second resin (B-2) was 4,300; the SP value of a hydrophobic site was 11.2; the acid value was 13; and the HLB value was 9.9. A hydrophobic compound constituting the hydrophobic site of the second resin (B-2) was a reaction product between the 3 mol PO-adduct of bisphenol A and terephthalic acid.

<Production Example 15: production of a second resin (B-3)>

A second resin (B-3) (polyester resin) was obtained as in Production Example 13, except that 830 parts (5 mol parts) of terephthalic acid in Production Example 13 was replaced by 580 parts (5 mol parts) of fumaric acid. The number-average molecular weight of the second resin (B-3) was 3,800; the SP value of a hydrophobic site was 11.1; the acid value was 15; and the HLB value was 10.9. A hydrophobic compound constituting the hydrophobic site of the second resin (B-3) was a reaction product between the 2 mol EO-adduct of bisphenol A and fumaric acid.

<Production Example 16: production of a 40 mol EO-adduct of bisphenol A (b2-2)>

A pressure-resistant reaction vessel equipped with a stirrer, a heating and cooling device, and a dropping funnel was charged with a 4 mol EO-adduct of bisphenol A "NEWPOL BPE-40" available from Sanyo Chemical Industries, Ltd. (404 parts (1 mol part)) and potassium hydroxide (2 parts). After purging with nitrogen, the pressure was adjusted to -0.08 MPa. The temperature was raised to 130°C, and EO (1584 parts (36 mol parts)) was added dropwise over 6 hours while the pressure was adjusted to 0.5 MPaG or lower. Subsequently, the resulting product was aged at 130°C for 3 hours. Then, after cooling to 100°C, the reaction vessel was charged with an adsorption treatment agent "KYOWAAD 600" available from Kyowa Chemical Industry Co., Ltd. (30 parts). After stirring at 100°C for 1 hour, the adsorption treatment agent was filtered, whereby a 40 mol EO-adduct of bisphenol A (b2-2) was obtained. The compound was provided for Production Example 17.

<Production Example 17: production of a second resin (B-4)>

A second resin (B-4) (polyester resin) was obtained as in Production Example 13, except that 1,928 parts (0.97 mol part) of the polyethylene glycol (b2-1)[trade name: "PEG-2000", manufactured by Sanyo Chemical Industries, Ltd., hydroxyl value: 56] in Production Example 13 was replaced by 1,928 parts (0.97 mol part) of the 40 mol EO-adduct of bisphenol A (b2-2), produced in Production Example 16. The number-average molecular weight of the second resin (B-4) was 4,000; the SP value of a hydrophobic site was 11.5; the acid value was 14; and the HLB value was 9.9. A hydrophobic compound constituting the hydrophobic site of the second resin (B-4) was a reaction product between the 2 mol EO-adduct of bisphenol A and terephthalic acid.

<Production Example 18: production of a second resin (B-5)>

A second resin (B-5) (polyester resin) was obtained as in Production Example 13, except that 830 parts (5 mol parts) of terephthalic acid in Production Example 13 was replaced by 498 parts (3 mol) of terephthalic acid and 232 parts (2 mol parts) of fumaric acid, and 1,928 parts (0.97 mol part) of the polyethylene glycol (b2-1) in Production Example 13 was replaced by 666 parts (0.33 parts) of the polyethylene glycol (b2-1) and 1,333 parts (1.33 mol parts) of a polyethylene glycol (b2-3)[trade name: "PEG-1000", manufactured by Sanyo Chemical Industries, Ltd., hydroxyl value: 112]. The number-average molecular weight of the second resin (B-5) was 4,300; the SP value of a hydrophobic site was 10.8; the acid value was 5; and the HLB value was 10. A hydrophobic compound constituting the hydrophobic site of the second resin (B-5) was a reaction product between the 2 mol EO-adduct of bisphenol A, terephthalic acid and fumaric acid.

<Production Example 19: production of a second resin (B-6)>

A second resin (B-6) (polyester resin) was obtained as in Production Example 13, except that 830 parts (5 mol parts) of terephthalic acid in Production Example 13 was replaced by 166 parts (1 mol) of terephthalic acid and 464 parts (4 mol parts) of fumaric acid, and 1,928 parts (0.97 mol part) of the polyethylene glycol (b2-1) in Production Example 13 was replaced by 666 parts (0.33 part) of the polyethylene glycol (b2-1) and 1,333 parts (1.33 mol parts) of the polyethylene glycol (b2-3). The number-average molecular weight of the second resin (B-6) was 4,200; the SP value of a hydrophobic site was 10.8; the acid value was 5; and the HLB value was 10. A hydrophobic compound constituting the hydrophobic site of the second resin (B-6) was a reaction product between the 2 mol EO-adduct of bisphenol A, terephthalic acid and fumaric acid.

<Production Example 20: production of a second resin (B-7)>

A second resin (B-7) (polyester resin) was obtained as in Production Example 14, except that 1,928 parts (0.97 mol part) of the polyethylene glycol (b2-1) in Production Example 14 was replaced by 1,000 parts (1.00 mol part) of the polyethylene glycol (b2-3). The number-average molecular weight of the second resin (B-7) was 3,100; the SP value of a hydrophobic site was 11.2; the acid value was 19; and the HLB value was 6. A hydrophobic compound constituting the hydrophobic site of the second resin (B-7) was a reaction product between the 3 mol PO-adduct of bisphenol A and terephthalic acid.

<Production Example 21: production of a second resin (B-8)>

A second resin (B-8) (polyester resin) was obtained as in Production Example 14, except that 1,928 parts (0.97 mol part) of the polyethylene glycol (b2-1) in Production Example 14 was replaced by 1,500 parts (1.50 mol parts) of the polyethylene glycol (b2-3). The number-average molecular weight of the second resin (B-8) was 3,600; the SP value of a hydrophobic site was 11.2; the acid value was 15; and the HLB value was 8. A hydrophobic compound constituting the hydrophobic site of the second resin (B-8) was a reaction product between the 3 mol PO-adduct of bisphenol A and terephthalic acid.

<Production Example 22: production of a second resin (B-9)>

A second resin (B-9) (polyester resin) was obtained as in Production Example 14, except that 1,928 parts (0.97 mol part) of the polyethylene glycol (b2-1) in Production Example 14 was replaced by 1,940 parts (0.97 mol part) of the polyethylene glycol (b2-1) and 1,000 parts (1.00 mol part) of the polyethylene glycol (b2-3). The number-average molecular weight of the second resin (B-9) was 5,100; the SP value of a hydrophobic site was 11.2; the acid value was 2; and the HLB value was 13. A hydrophobic compound constituting the hydrophobic site of the second resin (B-9) was a reaction product between the 3 mol PO-adduct of bisphenol A and terephthalic acid.

<Production Example 23: production of a second resin (B-10)>

In a glass reaction vessel, 348 parts (2 mol parts) of toluene diisocyanate was charged. After the atmosphere in the vessel was replaced by nitrogen, the temperature was regulated at 80°C under stirring and 402 parts (1 mol part) of a 3 mol PO-adduct of bisphenol A "Newpol BP-3P" (manufactured by Sanyo Chemical industries, Ltd.) was dropped over 5 hours to react, and thereafter cooled to 30°C. Then, 900 parts (0.45 mol part) of the polyethylene glycol (b2-1) and 1,550 parts (1.55 mol parts) of the polyethylene glycol (b2-3) were charged; after nitrogen replacement, the resultant was heated up to 80°C under stirring and allowed to react for 5 hours to thereby obtain a second resin (B-10) (polyurethane resin). The number-average molecular weight of the second resin (B-10) was 3,300; the SP value of a hydrophobic site was 11.2; the acid value was 0; and the HLB value was 15. A hydrophobic compound constituting the hydrophobic site of the second resin (B-10) was a reaction product between the 3 mol PO-adduct of bisphenol A and toluene diisocyanate.
<Production Example 24: production of a second resin (B-11) >
A second resin (B-11) (polyester resin) was obtained as in Production Example 14, except that 1,928 parts (0.97 mol part) of the polyethylene glycol (b2-1) in Production Example 14 was replaced by 300 parts (0.3 mol part) of the polyethylene glycol (b2-3) and 420 parts (0.7 mol part) of a polyethylene glycol (b2-4)[trade name: "PEG-600", manufactured by Sanyo Chemical Industries, Ltd., hydroxyl value: 187]. The number-average molecular weight of the second resin (B-11) was 2,900; the SP value of a hydrophobic site was 11.2; the acid value was 12; and the HLB value was 5. A hydrophobic compound constituting the hydrophobic site of the second resin (B-11) was a reaction product between the 3 mol PO-adduct of bisphenol A and terephthalic acid.

<Production Example 25: production of a second resin (B-12) >

A second resin (B-12) (polyester resin) was obtained as in Production Example 14, except that 1,608 parts (4 mol parts) of the 3 mol PO-adduct of bisphenol A [trade name: "Newpol BP-3P", manufactured by Sanyo Chemical industries, Ltd.] in Production Example 14 was replaced by 804 parts (2 mol parts) thereof, 830 parts (5 mol parts) of terephthalic acid therein was replaced by 498 parts (3 mol parts) of terephthalic acid, and 1,928 parts (0.97 mol part) of the polyethylene glycol (b2-1) therein was replaced by 4,000 parts (1 mol part) of a polyethylene glycol (b2-5)[trade name: "PEG-4000", manufactured by Sanyo Chemical Industries, Ltd., hydroxyl value: 28]. The number-average molecular weight of the second resin (B-12) was 5,200; the SP value of a hydrophobic site was 11.2; the acid value was 8; and the HLB value was 16. A hydrophobic compound constituting the hydrophobic site of the second resin (B-12) was a reaction product between the 3 mol PO-adduct of bisphenol A and terephthalic acid.

<Comparative Production Example 1: production of an aromatic polyester resin (B'-1)>

An aromatic polyester resin (B'-1) was obtained as in Production Example 25, except that 4,000 parts (1 mol part) of the polyethylene glycol (b2-5) in Production Example 25 was replaced by 600 parts (1 mol part) of the polyethylene glycol (b2-4). The number-average molecular weight of the aromatic polyester resin (B'-1) was 1,900; the SP value of a hydrophobic site was 11.2; the acid value was 30; and the HLB value was 10. A hydrophobic compound constituting the hydrophobic site of the aromatic polyester resin (B'-1) was a reaction product between the 3 mol PO-adduct of bisphenol A and terephthalic acid.

<Comparative Production Example 2: production of an aromatic polyester resin (B'-2)>

An aromatic polyester resin (B'-2) was obtained as in Production Example 25, except that 4,000 parts (1 mol part) of the polyethylene glycol (b2-5) in Production Example 25 was replaced by 300 parts (0.5 mol part) of the polyethylene glycol (b2-4). The number-average molecular weight of the aromatic polyester resin (B'-2) was 1,600; the SP value of a hydrophobic site was 11.2; the acid value was 55; and the HLB value was 10. A hydrophobic compound constituting the hydrophobic site of the aromatic polyester resin (B'-2) was a reaction product between the 3 mol PO-adduct of bisphenol A and terephthalic acid.

<Examples 1 to 27 and Comparative Examples 1 to 8: production of fiber sizing agent compositions>

Raw materials, other than water, in amounts (parts) described in Tables 2 to 4 were homogeneously dissolved for 30 minutes in a universal mixer [universal mixing stirrer, manufactured by Sanei Seisakusho K.K.] with the temperature controlled to 60°C; thereafter, water was dropped thereto over 6 hours, to thereby obtain 250 parts of fiber sizing agent compositions (X-1) to (X-27) according to Examples and fiber sizing agent compositions (X'-1) to (X'-8) according to Comparative Examples, whose solid content concentrations were 40 wt%, respectively.

Raw materials of symbols described in Table 2 to Table 4 were as follows.

(A-1): the first resin produced in Production Example 1
(A-2): the first resin produced in Production Example 2
(A-3): the first resin produced in Production Example 3
(A-4): the first resin produced in Production Example 4
(A-5): the first resin produced in Production Example 5
(A-6): the first resin produced in Production Example 6
(A-7): the first resin produced in Production Example 8
(A-8): the first resin produced in Production Example 9
(A-9): the first resin produced in Production Example 10
(A-10): the first resin produced in Production Example 11
(A-11): the first resin produced in Production Example 12
(B-1): the second resin produced in Production Example 13
(B-2): the second resin produced in Production Example 14
(B-3): the second resin produced in Production Example 15
(B-4): the second resin produced in Production Example 17
(B-5): the second resin produced in Production Example 18
(B-6): the second resin produced in Production Example 19
(B-7): the second resin produced in Production Example 20
(B-8): the second resin produced in Production Example 21
(B-9): the second resin produced in Production Example 22
(B-10): the second resin produced in Production Example 23
(B-11): the second resin produced in Production Example 24
(B-12): the second resin produced in Production Example 25
(B'-1): the aromatic polyester resin produced in Comparative Production Example 1
(B'-2): the aromatic polyester resin produced in Comparative Production Example 2
(C-1): an EO and PO adduct of styrenated phenol (trade name: "Soprophor 796P", manufactured by Solvay Nicca, Ltd., HLB: 13.7)
(C-2): an EO and PO adduct of styrenated phenol (trade name: "Soprophor TSP/724", manufactured by Solvay Nicca, Ltd., HLB: 12.3)
(D-1): a bisphenol A epoxy resin [trade name: "JER1001", manufactured by Mitsubishi Chemical Corp., Mn: 1,000]
(D-2): a bisphenol A epoxy resin [trade name: "JER1004", manufactured by Mitsubishi Chemical Corp., Mn: 2,000]
(E-1): an acrylic acid adduct of bisphenol A diglycidyl ether (terminated with diacrylate at both ends) [trade name: "Epoxy Ester 3000A", manufactured by Kyoeisha Chemical Co., Ltd., Mn: 1,650]

<Evaluation tests>

By using the fiber sizing agent compositions of Examples and Comparative Examples, the sizing properties of carbon fiber bundles, fluff, and the matrix resin (vinyl ester resin) were evaluated by methods described in Evaluation Tests 1 to 3. The fiber sizing agent compositions obtained in Examples and Comparative Examples were stored at 40°C for 14 days; thereafter, the above-mentioned performance (sizing properties, fluffing and adhesion) was measured by methods described in Evaluation Tests 1 to 3; and the evaluation of the change over time was made by a method described in Evaluation Test 4. Further, the storage stability of the fiber sizing agent compositions obtained in Examples and Comparative Examples was evaluated by a method of Evaluation Test 5. The results are shown in Table 2 to Table 4.

<Evaluation Test 1: evaluation of the sizing properties>

(1) Untreated carbon fibers (fineness: 800 tex; number of filaments: 12000) were immersed in an aqueous solution obtained by diluting the fiber sizing agent composition with water to a solid concentration of 1.5 wt% in order to impregnate the fibers with the sizing agent, followed by hot air drying at 180°C for 3 minutes, whereby a carbon fiber bundle was produced.

(2) The sizing properties of the carbon fiber bundle were evaluated in accordance with JIS L 1096-1999 8.19.1, Method A (45° Cantilever method).

A higher value (cm) indicates better sizing properties.

The carbon fiber bundle obtained under such treatment conditions was evaluated using a cantilever. Generally, the value of sizing properties is preferably 13 cm or more.

<Evaluation Test 2: evaluation of the fluffing>

(1) A carbon fiber bundle was produced by the same method as the method described in (1) of the evaluation of the sizing properties.
(2) Five chrome-plated stainless steel rods each having a diameter of 2 mm were arranged in a zigzag manner with a spacing of 15 mm therebetween so as to allow the carbon fiber bundle to pass the surfaces of these stainless steel rods in contact with each of them with a contact angle of 120°.

The carbon fiber bundle was set in a zigzag manner between these stainless steel rods, and a tension of 1 kgf was applied. The carbon fiber was sandwiched between two 10 cm $\times$ 10 cm sheets of urethane foam under a load of 1 kgf at a position immediately before a wind-up roll so as to be scratched at a speed of 1 m/min for 5 minutes.

(3) The weight of fluff attached to the sponge during scratching was measured, and the weight (mg/m) of fluff per fiber unit length was calculated.

A lower weight of the fluff per unit length indicates less occurrence of fluffing.

Generally, the amount of fluff of the carbon fiber bundle obtained under the above treatment conditions is preferably 0.05 mg/m or less.

<Evaluation Test 3: evaluation of adhesion (vinyl ester resin)>

The adhesion was evaluated by the microdroplet method.

(1) A carbon fiber filament was taken out from the carbon fiber bundle obtained by the above method, and was set in a sample holder.
(2) A microdroplet of a matrix resin containing vinyl ester resin (25 parts by weight) ("Ripoxy R-804" available from Showa Denko K.K. (100 parts by weight) and a curing agent "PERMEK N" available from NOF Corporation (25 parts by weight)) was formed on the carbon fiber filament, followed by heating at 25°C for 24 hours and 120°C for 5 hours for curing, whereby a sample for adhesion measurement was obtained.
(3) The sample for measurement was set in a device for evaluation of composite interface properties "HM410" available from Tohei Sangyo Co., Ltd., and the maximum pull-out load F when pulling out the microdroplet from the carbon fiber filament was measured.
(4) Interfacial shear strength τ was calculated by the following formula:

$$\texttt{Interfacial shear strength } \tau \texttt{ (unit: MPa) = F/} \pi \texttt{dL}$$

where F is the maximum pull-out load (N), d is the diameter ($\mu$m) of a carbon fiber filament, and L is the particle size ($\mu$m) of the microdroplet in the pulling-out direction.

A higher interfacial shear strength τ indicates better adhesion, and is preferably 43 MPa or more, more preferably 45 MPa or more.

<Evaluation Test 4: evaluation of the change over time>

There were carried out by methods of Evaluation Tests 1 to 3, measurements of the sizing properties, the fluffing and the adhesion of the fiber sizing agent compositions obtained in Examples and Comparative Examples, before being stored at 40°C for 14 days and after the storage, respectively. The change over time (%) was calculated by the following expression and evaluated according to the following evaluation criteria. "‖" in the following expression indicates an absolute value.

$$\text{Change over time (\%) = |a measurement result after the storage − a measurement result before the storage) × 100 / (the measurement result before the storage)|}$$

(Evaluation criteria)

AA: 0% or higher, lower than 2%
A: 2% or higher, lower than 5%
B: 5% or higher, lower than 10%
C: 10% or higher, lower than 200
D: 200 or higher

<Evaluation Test 5: evaluation of the storage stability> (5-1: the storage stability of the composition at 40°C)

30 g of the fiber sizing agent composition of each Example was put in a screw vial [50 mL (35 mm in body diameter × 78 mm in height), and stored at 40°C for 14 days. By using measurement results of the median diameters ($\mu$m) before and after the storage, the storage stability (%) at 40°C was calculated by the following expression, and evaluated according to the following evaluation criteria.

The median diameter was measured by using a laser diffraction particle size distribution analyzer "LA-750" [manufactured by Horiba Ltd.] (the same applies to the following Evaluation Test).

$$\text{Storage stability at 40°C (\%) = (a median diameter after the storage) × 100 / (a median diameter before the storage)}$$

(Evaluation criteria)

AA: lower than 1050
A: 1050 or higher, lower than 110%
B: 110% or higher, lower than 1150
C: 1150 or higher, lower than 1200
D: 1200 or higher

(5-2: the storage stability of the composition at 5°C)

30 g of the fiber sizing agent composition of each Example was put in a screw vial [50 mL (35 mm in body diameter × 78 mm in height), and stored at 5°C for 14 days. By using measurement results of the median diameters ($\mu$m) before and after the storage, the storage stability (%) at 5°C was calculated by the following expression, and evaluated according to the following evaluation criteria.

$$\text{Storage stability at 5°C (\%) = (a median diameter after the storage) × 100 / (a median diameter before the storage)}$$

(Evaluation criteria)

AA: lower than 1050
A: 1050 or higher, lower than 110%
B: 110% or higher, lower than 1150
C: 1150 or higher, lower than 1200
D: 1200 or higher

[Table 2]

| | | | Example | | | | | | | | | | |
|---|---|---|---|---|---|---|---|---|---|---|---|---|---|
| Fiber sizing agent composition (X) | | | 1 | 2 | 3 | 4 | 5 | 6 | 7 | 8 | 9 | 10 | 11 |
| | | | (X-1) | (X-2) | (X-3) | (X-4) | (X-5) | (X-6) | (X-7) | (X-8) | (X-9) | (X-10) | (X-11) |
| Content (parts by weight) | First resin | (A-1) | 45 | - | - | - | - | - | - | - | 45 | 45 | 45 |
| | | (A-2) | - | 45 | - | - | - | - | - | - | - | - | - |
| | | (A-3) | - | - | 40 | - | - | - | - | - | - | - | - |
| | | (A-4) | - | - | - | 45 | - | - | - | - | - | - | - |
| | | (A-5) | - | - | - | - | 45 | - | - | - | - | - | - |
| | | (A-6) | - | - | - | - | - | 30 | - | - | - | - | - |
| | | (A-7) | - | - | - | - | - | - | 30 | - | - | - | - |
| | | (A-8) | - | - | - | - | - | - | - | 45 | - | - | - |
| | Second resin | (B-1) | 45 | 45 | 45 | 45 | 45 | 35 | 35 | 45 | - | - | - |
| | | (B-2) | - | - | - | - | - | - | - | - | 45 | - | - |
| | | (B-3) | - | - | - | - | - | - | - | - | - | 45 | - |
| | | (B-4) | - | - | - | - | - | - | - | - | - | - | 45 |
| | Nonionic surfactant | (C-1) | 5 | 5 | 5 | 5 | 5 | 10 | 10 | 5 | 10 | 10 | 10 |
| | | (C-2) | 5 | 5 | 5 | 5 | 5 | 5 | 5 | 5 | - | - | - |
| | (D) component | (D-1) | - | - | - | - | - | 20 | 20 | - | - | - | - |
| | | (D-2) | - | - | 5 | - | - | - | - | - | - | - | - |
| | Water | | 150 | 150 | 150 | 150 | 150 | 150 | 150 | 150 | 150 | 150 | 150 |
| Properties of second resin | SP value of hydrophobic site | | 11.5 | 11.5 | 11.5 | 11.5 | 11.5 | 11.5 | 11.5 | 11.5 | 11.2 | 11.1 | 11.5 |
| | HLB | | 10.2 | 10.2 | 10.2 | 10.2 | 10.2 | 10.2 | 10.2 | 10.2 | 9.9 | 10.9 | 9.9 |
| | Acid value | | 14 | 14 | 14 | 14 | 14 | 14 | 14 | 14 | 13 | 15 | 14 |
| Evaluation Test 1 (sizing properties) | | | 19 | 22 | 17 | 23 | 19 | 17 | 18 | 19 | 19 | 19 | 19 |
| Evaluation Test 2 (fluffing) | | | 0.020 | 0.012 | 0.024 | 0.011 | 0.022 | 0.029 | 0.029 | 0.028 | 0.019 | 0.021 | 0.022 |
| Evaluation Test 3 (adhesion) | | | 52 | 49 | 56 | 49 | 53 | 51 | 49 | 49 | 52 | 51 | 53 |
| Evaluation Test 4 | Sizing properties | | AA | AA | AA | AA | AA | AA | AA | AA | AA | AA | AA |
| | Fluffing | | AA | AA | AA | B | AA | AA | AA | AA | AA | AA | AA |
| | Adhesion | | AA | AA | AA | A | AA | AA | AA | AA | AA | AA | AA |
| Storage stability (5°C) | | | AA | AA | AA | A | AA | A | A | AA | AA | AA | AA |
| Storage stability (40°C) | | | A | A | A | A | A | A | A | A | A | A | A |

[Table 3]

| Fiber sizing agent composition (X) | | | Example | | | | | | | | | |
|---|---|---|---|---|---|---|---|---|---|---|---|---|
| | | | 12 | 13 | 14 | 15 | 16 | 17 | 18 | 19 | 20 | 21 |
| | | | (X-12) | (X-13) | (X-14) | (X-15) | (X-16) | (X-17) | (X-18) | (X-19) | (X-20) | (X-21) |
| Content (parts by weight) | First resin | (A-1) | 40 | 40 | 40 | 55 | 35 | - | - | - | 45 | 45 |
| | | (A-9) | - | - | - | - | - | 45 | - | - | - | - |
| | | (A-10) | - | - | - | - | - | - | 45 | - | - | - |
| | | (A-11) | - | - | - | - | - | - | - | 45 | - | - |
| | Second resin | (B-1) | 40 | 40 | 40 | 25 | 60 | - | - | - | - | - |
| | | (B-2) | - | - | - | - | - | 45 | - | - | - | - |
| | | (B-3) | - | - | - | - | - | - | 45 | 45 | - | - |
| | | (B-4) | - | - | - | - | - | - | - | - | - | - |
| | | (B-5) | - | - | - | - | - | - | - | - | 45 | - |
| | | (B-6) | - | - | - | - | - | - | - | - | - | 45 |
| | Nonionic surfactant | (C-1) | 12 | 10 | 12 | 20 | 5 | 10 | 10 | 10 | 10 | 10 |
| | | (C-2) | - | 2 | - | - | - | 2 | 2 | 2 | 2 | 2 |
| | (D) component | (D-1) | 8 | - | - | - | - | - | - | - | - | - |
| | | (D-2) | - | 8 | - | - | - | - | - | - | - | - |
| | (E-1) | | - | - | 8 | - | - | - | - | - | - | - |
| | Water | | 150 | 150 | 150 | 150 | 150 | 150 | 150 | 150 | 150 | 150 |
| Properties of second resin | SP value of hydrophobic site | | 11.5 | 11.5 | 11.5 | 11.5 | 11.5 | 11.2 | 11.1 | 11.1 | 10.8 | 10.8 |
| | HLB | | 10.2 | 10.2 | 10.2 | 10.2 | 10.2 | 9.9 | 10.9 | 10.9 | 10 | 10 |
| | Acid value | | 14 | 14 | 14 | 14 | 14 | 13 | 15 | 15 | 5 | 5 |
| Evaluation Test 1 (sizing properties) | | | 19 | 20 | 19 | 16 | 17 | 23 | 19 | 18 | 18 | 18 |
| Evaluation Test 2 (fluffing) | | | 0.021 | 0.018 | 0.022 | 0.030 | 0.009 | 0.033 | 0.042 | 0.043 | 0.022 | 0.019 |
| Evaluation Test 3 (adhesion) | | | 51 | 51 | 51 | 55 | 48 | 47 | 47 | 46 | 48 | 44 |
| Evaluation Test 4 | Sizing properties | | AA | AA | AA | AA | AA | AA | AA | AA | AA | AA |
| | Fluffing | | AA | A | AA | A | AA | AA | AA | AA | AA | AA |
| | Adhesion | | AA | AA | AA | A | AA | AA | AA | AA | AA | AA |
| Storage stability (5°C) | | | AA | AA | AA | B | AA | AA | A | A | A | A |
| Storage stability (40°C) | | | A | A | A | B | AA | A | A | A | AA | AA |

[Table 4]

| Fiber sizing agent composition (X) | | | Example | | | | | | Comparative Example | | | | | | | |
|---|---|---|---|---|---|---|---|---|---|---|---|---|---|---|---|---|
| | | | 22 | 23 | 24 | 25 | 26 | 27 | 1 | 2 | 3 | 4 | 5 | 6 | 7 | 8 |
| | | | (X-22) | (X-23) | (X-24) | (X-25) | (X-26) | (X-27) | (X'-1) | (X'-2) | (X'-3) | (X'-4) | (X'-5) | (X'-6) | (X'-7) | (X'-8) |
| Content (parts by weight) | First resin | (A-1) | 45 | 45 | 45 | 45 | 45 | 45 | 75 | - | 50 | 50 | - | - | 45 | - |
| | | (A-2) | - | - | - | - | - | - | - | - | - | - | - | - | - | 45 |
| | Second resin | (B-1) | - | - | - | - | - | - | - | 100 | - | - | 45 | 45 | - | - |
| | | (B-7) | 45 | - | - | - | - | - | - | - | - | - | - | - | - | - |
| | | (B-8) | - | 45 | - | - | - | - | - | - | - | - | - | - | - | - |
| | | (B-9) | - | - | 45 | - | - | - | - | - | - | - | - | - | - | - |
| | | (B-10) | - | - | - | 45 | - | - | - | - | - | - | - | - | - | - |
| | | (B-11) | - | - | - | - | 45 | - | - | - | - | - | - | - | - | - |
| | | (B-12) | - | - | - | - | - | 45 | - | - | - | - | - | - | - | - |
| | Aromatic polyester | (B'-1) | - | - | - | - | - | - | - | - | - | - | - | - | 45 | - |
| | | (B'-2) | - | - | - | - | - | - | - | - | - | - | - | - | - | 45 |
| | Nonionic surfactant | (C-1) | 10 | 10 | 7 | 5 | 10 | 5 | 15 | - | 15 | 10 | 10 | 5 | 10 | 10 |
| | | (C-2) | 10 | 10 | - | - | 10 | - | 10 | - | 10 | 15 | 5 | 5 | 2 | 2 |
| | Water | | 150 | 150 | 150 | 150 | 150 | 150 | 150 | 150 | 150 | 150 | 150 | 150 | 150 | 150 |
| Properties of second resin or aromatic polyester resin | SP value of hydrophobic site | | 11.2 | 11.2 | 11.2 | 11.2 | 11.2 | 11.2 | - | 11.5 | - | - | 11.5 | 11.5 | 11.2 | 11.2 |
| | HLB | | 6 | 8 | 13 | 15 | 5 | 16 | - | 10.2 | - | - | 10.2 | 10.2 | 10 | 10 |
| | Acid value | | 19 | 15 | 2 | 0 | 12 | 8 | - | 14 | - | - | 14 | 14 | 30 | 55 |
| Evaluation Test 1 (sizing properties) | | | 19 | 20 | 20 | 20 | 19 | 19 | 13 | 18 | 12 | 12 | 16 | 17 | 20 | 20 |
| Evaluation Test 2 (fluffing) | | | 0.039 | 0.028 | 0.035 | 0.048 | 0.045 | 0.041 | 0.180 | 0.043 | 0.098 | 0.085 | 0.049 | 0.024 | 0.25 | 0.28 |
| Evaluation Test 3 (adhesion) | | | 51 | 51 | 49 | 48 | 51 | 47 | 53 | 35 | 52 | 52 | 42 | 41 | 48 | 48 |
| Evaluation Test 4 | Sizing properties | | AA | AA | AA | AA | A | A | C | AA | C | C | AA | AA | A | A |
| | Fluffing | | AA | A | AA | A | B | B | D | AA | C | D | AA | A | A | B |
| | Adhesion | | AA | AA | AA | A | A | A | C | AA | D | C | AA | AA | C | C |
| Storage stability (5°C) | | | A | AA | AA | A | B | B | D | AA | C | C | AA | A | B | C |
| Storage stability (40°C) | | | B | A | AA | AA | B | A | D | AA | D | D | A | A | C | C |

From the results of Table 2 to Table 4, it is clear that the use of the fiber sizing agent compositions of Examples 1 to 27 enabled high sizing properties to be held and simultaneously, fiber bundles having less fluffing to be produced, and the adhesion between fibers and the matrix resin to be improved. It is also clear that the use of the fiber sizing agent compositions of Examples 1 to 27 made the change over time small and the storage stability at 5°C and 40°C excellent. From these results, it has been made clear that according to the present invention, a sizing agent can be provided which has small change in the performance over time, can improve the adhesion between fibers and the matrix resin, and can give fiber bundles and fiber products having high sizing properties and simultaneously having less fluffing.

**Claims**

1. A fiber sizing agent composition comprising:

    a first resin (A) having at least one first functional group selected from the group consisting of a vinyl group, a vinylene group and a sulfanyl group, and at least one second functional group selected from the group consisting of an epoxy group, an amino group and an oxazolin-2-yl group; and
    a second resin (B) being a resin other than the first resin (A), having an acid value of 0 to 20 mgKOH/g, and having a hydrophobic site with an SP value of 10.6 to 11.6 $(cal/cm^3)^{1/2}$.

2. The fiber sizing agent composition according to claim 1, wherein a weight ratio of the first resin (A) to the second resin (B) (weight of the first resin (A)/weight of the second resin (B)) is 20/80 to 90/10.

3. The fiber sizing agent composition according to claim 1 or 2, wherein the second resin (B) is an aromatic polyester resin having an oxyalkylene group.

4. The fiber sizing agent composition according to any one of claims 1 to 3, further comprising a nonionic surfactant (C).

5. A fiber bundle comprising: at least one type of fibers selected from the group consisting of carbon fibers, glass fibers, aramid fibers, ceramic fibers, metal fibers, mineral fibers, and slag fibers, the fibers being treated with the fiber sizing agent composition according to any one of claims 1 to 4.

6. A fiber bundle comprising:

    at least one type of fibers selected from the group consisting of carbon fibers, glass fibers, aramid fibers, ceramic fibers, metal fibers, mineral fibers and slag fibers;
    a first resin (A) having at least one first functional group selected from the group consisting of a vinyl group, a vinylene group and a sulfanyl group, and at least one second functional group selected from the group consisting of an epoxy group, an amino group and an oxazolin-2-yl group, and/or a reaction product of the first resin (A) ; and
    a second resin (B) being a resin other than the first resin (A), having an acid value of 0 to 20 mgKOH/g and having a hydrophobic site with an SP value of 10.6 to 11.6 $(cal/cm^3)^{1/2}$, and/or a reaction product of the second resin (B),
    wherein the reaction product of the first resin (A) comprises a reaction product obtained from a reaction between the first resins (A) and/or a reaction product obtained from a reaction between the first resin (A) and a fiber; and
    the reaction product of the second resin (B) comprises a reaction product obtained from a reaction between the second resin (B) and the first resin (A) and/or a reaction product obtained from a reaction between the second resin (B) and a fiber.

7. A fiber product comprising the fiber bundle according to claim 5 or 6.

8. A composite material comprising:

    the fiber bundle according to claim 5 or 6; and
    a matrix resin.

9. A composite material comprising:

    the fiber product according to claim 7; and
    a matrix resin.

## INTERNATIONAL SEARCH REPORT

| International application No. |
| --- |
| **PCT/JP2021/039804** |

| A. | CLASSIFICATION OF SUBJECT MATTER |
| --- | --- |

*D06M 15/273*(2006.01)i; *D06M 15/507*(2006.01)i; *D06M 15/572*(2006.01)i
FI:   D06M15/273; D06M15/507; D06M15/572

According to International Patent Classification (IPC) or to both national classification and IPC

| B. | FIELDS SEARCHED |
| --- | --- |

Minimum documentation searched (classification system followed by classification symbols)

D06M15/273; D06M15/507; D06M15/572

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2017/078142 A1 (MITSUBISHI RAYON CO) 11 May 2017 (2017-05-11) entire text | 1-9 |
| A | JP 2019-163583 A (SANYO CHEMICAL IND LTD) 26 September 2019 (2019-09-26) entire text | 1-9 |
| A | WO 2015/045618 A1 (MATSUMOTO YUSHI SEIYAKU KK) 02 April 2015 (2015-04-02) entire text | 1-9 |
| A | JP 2015-190067 A (TAKEMOTO OIL & FAT CO LTD) 02 November 2015 (2015-11-02) entire text | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 December 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2021/039804** |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: １－９のうちスルファニル基に関する部分
because they relate to parts of the international application that do not comply with the prescribed requirements to such an extent that no meaningful international search can be carried out, specifically:

Regarding the invention, in which a first functional group of a first resin (A) is a sulfanyl group, in claims 1-9

A vinyl group, a vinylene group, and a sulfanyl group do not have a common chemical structure. Moreover, it is not considered that there is the common technical knowledge that a vinyl group, a vinylene group, and a sulfanyl group have common properties and functions and are replaceable with each other. In addition, even with reference to the disclosure of the specification, there is no specific example of the invention in which a first functional group of a first resin (A) is a sulfanyl group, and no theoretical explanation for the same is given.

Therefore, the invention in which a first functional group of a first resin (A) is a sulfanyl group is not disclosed within the meaning of PCT Article 5, and lacks support within the meaning of PCT Article 6.

3. ☐ Claims Nos.:
because they are dependent claims and are not drafted in accordance with the second and third sentences of Rule 6.4(a).

Form PCT/ISA/210 (continuation of first sheet) (January 2015)

**INTERNATIONAL SEARCH REPORT**
Information on patent family members

International application No.

**PCT/JP2021/039804**

| Patent document cited in search report | | | Publication date (day/month/year) | Patent family member(s) | | | Publication date (day/month/year) |
|---|---|---|---|---|---|---|---|
| WO | 2017/078142 | A1 | 11 May 2017 | US | 2018/0245246 | A1 | |
| | | | | entire text | | | |
| | | | | EP | 3372728 | A1 | |
| | | | | KR | 10-2018-0057707 | A | |
| | | | | CN | 108350645 | A | |
| | | | | MX | 2018005378 | A | |
| | | | | KR | 10-2020-0058608 | A | |
| JP | 2019-163583 | A | 26 September 2019 | (Family: none) | | | |
| WO | 2015/045618 | A1 | 02 April 2015 | CN | 105378176 | A | |
| | | | | entire text | | | |
| | | | | KR | 10-2016-0061319 | A | |
| | | | | TW | 201525233 | A | |
| JP | 2015-190067 | A | 02 November 2015 | (Family: none) | | | |

Form PCT/ISA/210 (patent family annex) (January 2015)

# EP 4 239 120 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013249562 A
- JP H03065311 A
- WO 2020027126 A
- WO 200347830 A
- JP 2005213337 A

### Non-patent literature cited in the description

- *Polymer Engineering and Science,* February 1974, vol. 14 (2), 147-154
- Synthesis of Surfactants and their Applications. Maki Shoten Publishing Co., Ltd, 1957, 501
- Introduction to Surfactants. Sanyo Chemical Industries, Ltd, 2007, 212-213